(19) Europäisches Patentamt
European Patent Office
Office européen des brevets

(11) EP 1 340 781 A1

(12) **EUROPEAN PATENT APPLICATION**

(43) Date of publication:
**03.09.2003 Bulletin 2003/36**

(21) Application number: **03004402.8**

(22) Date of filing: **27.02.2003**

(51) Int Cl.7: **C08J 3/00**, C08J 3/02, C08J 3/03, C08J 3/05, C08J 3/07, C08L 95/00

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **01.03.2002 JP 2002056370**
**01.03.2002 JP 2002056371**

(71) Applicants:
- **DAI-ICHI KOGYO SEIYAKU CO., LTD. Shimogyo-ku, Kyoto-shi, Kyoto-fu (JP)**
- **DAI-ICHI KOGYO SEIYAKU CO., LTD. Shimogyo-ku Kyoto (JP)**

(72) Inventors:
- **Suzuki, Ginpei Chuo-ku, Tokyo-to (JP)**
- **Okubo, Yukihiro Chuo-ku, Tokyo-to (JP)**
- **Ito, Etuo Nagaokakyo-shi, Kyoto-fu (JP)**
- **Kuze, Masayo Koka-gun, Shiga-ken (JP)**

(74) Representative:
**DIEHL GLAESER HILTL & PARTNER Patentanwälte Königstrasse 28 22767 Hamburg (DE)**

(54) **Aqueous emulsion dispersion of thermoplastic elastomer and process for preparing the same**

(57) The present invention provides an aqueous emulsion dispersion widely applicable and capable of providing excellent properties even when used by mixing into other conventional emulsions used for many utilities. The aqueous emulsion dispersion has improved stability over time and mechanical stability, and when used as an asphalt modifier, the aqueous emulsion dispersion can be easily mixed and dissolved into hot asphalt or asphalt emulsion and can improve flow resistance, toughness and low temperature flexibility of asphalt without losing workability. The present invention also relates to a process for preparing the aqueous emulsion dispersion.

The aqueous emulsion dispersion of thermoplastic elastomer is obtained by emulsifying and dispersing a thermoplastic elastomer by using three different kinds of surfactant of a nonionic surfactant, an anionic surfactant and a cationic surfactant.

EP 1 340 781 A1

## Description

The present invention relates to an aqueous emulsion dispersion of thermoplastic elastomer and a process for producing the same. More specifically, the present invention relates to an aqueous emulsion dispersion of thermoplastic elastomer, which has improved emulsion properties and increased stability over time and mechanical stability, as three different kinds of surfactant of a nonionic surfactant, anionic surfactant and cationic surfactant are used for emulsifying and dispersing the thermoplastic elastomer, and a process for preparing the same. When used as an emulsion or by mixing to another emulsion, the aqueous emulsion dispersion of thermoplastic elastomer is capable of providing suitable properties for modifying asphalt, for coated paper, foam rubber, tire cord, coating (for can, plastic, inorganic materials or wood), paint, floor polish, adhesive (aqueous adhesive, polymer cement or mortar adhesive), tackifier, repeeling label, direct mail, processing of fiber such as carpet, automobile sheet or mat, and water-proofing materials.

As a way to use block copolymer latex which can be utilized for various purposes, a modifying agent comprising a polymer material such as rubber or resin (including thermoplastic elastomers, the same below) is added to asphalt to improve the viscosity at 60°C, toughness, tenacity and temperature sensitivity. Asphalt (modified asphalt) has been developed in this way and is now being practically used for improving the flow resistance and abrasion resistance of paving.

There is the disclosure of using an asphalt modifier in the form of aqueous emulsion dispersion having an average particle diameter of at most 5 μm, which is obtained by dissolving a thermoplastic elastomer in an organic solvent, then adding 10 % by weight (hereinafter %) of an emulsion dispersing agent containing an anionic surfactant having a polyalkylene oxide group as a main component and a nonionic surfactant when in demand, adding warm water to emulsify and disperse and removing the organic solvent (JP-A-2-292368).

As the concrete examples of anionic surfactant containing a polyalkylene oxide group and nonionic surfactant when in demand, poly(oxyethylene nonyl phenol ether) sodium sulfate (an adduct with 4 moles of ethylene oxide), poly (oxyethylene dodecyl ether) sodium acetate (an adduct with 3 moles of ethylene oxide) and poly(oxyethylene nonyl phenol ether) (an adduct with 4 moles of ethylene oxide) are given, respectively.

Also, as a block copolymer latex which can be used for various purposes, there is a disclosure of a block copolymer latex emulsified with a block copolymer represented by the formula: A-B-A, $(A\text{-}B)_n$, $B\text{-}(A\text{-}B)_n$, $(A\text{-}B)_n\text{-}A$ or $A\text{-}B\text{-}(B\text{-}A)_n$ (in which A is a non-elastic polymer block having a secondary transition temperature of at least 25°C, B is an elastic polymer block having a secondary transition temperature of at most 10°C and n is an integer of at least 2), by using, as an emulsifier, (a) rhodinate or heterogeneous rhodinate and (b) a compound represented by the formula:

$R^1(O\text{-}R^2)_mOH$ or 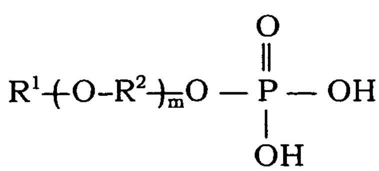

(in which $R^1$ is a $C_{8\text{-}18}$ alkyl group or $C_{8\text{-}12}$ alkyl phenyl group, $R^2$ is a $C_2$-5 alkylene group and m is an integer of 3 to 50), and a tackifier (methyl cellulose, carboxymethyl celluose, hydroxyethyl cellulose, casein, poly(acrylic acid) or a derivative thereof) when necessary (JP-B-52-22651).

As a technical art similar to obtaining the block copolymer latex mentioned above, a styrene-butadiene copolymer latex useful for various purposes is also disclosed (JP-52-B-15100 and JP-A-51-13847). This latex is obtained by emulsifying a styrene-butadiene random copolymer, a styrene-butadiene binary block copolymer or a mixture thereof, by using, as an emulsifier, (a) higher fatty acid, rhodinate or heterogeneous rhodinate and (b) a compound represented by the formula:

$R^1(O\text{-}R^2)_nOH$ or 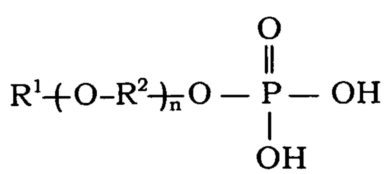

(in which $R^1$ is a $C_{8-18}$ alkyl group or $C_{8-12}$ alkyl phenyl group, $R^2$ is a $C_{2-5}$ alkylene group and n is an integer of 3 to 50) dissolved in the polymer solution, and mixing the resulting mixture with aqueous alkaline solution.

However, both the block copolymer latex and the styrene-butadiene copolymer latex have the problem that the stability over time or mechanical stability is not satisfactory.

In order to solve the problem, the present inventors developed an asphalt modifier in the form of aqueous emulsion dispersion using, as an emulsifier for emulsifying and dispersing a thermoplastic elastomer, at least one member selected from the group consisting of styrenated phenol polyalkylene oxide adduct, polyalkylene polyamine polyalkylene oxide adduct, multivalent alcohol fatty acid esters, multivalent alcohol fatty acid ester polyalklene oxide adduct and benzylated phenol polyalkylene oxide adduct, and an anionic surfactant. The asphalt modifier can be mixed and dissolved in hot asphalt by a simple method, can improve the flowing resistance, toughness and low temperature flexibility of asphalt without losing workability, and has improved stability over time and mechanical stability (JP-A-2001-59053).

The asphalt modifier in the form of aqueous emulsion disclosed dispersion in JP-A-2001-59053 is superior to conventional asphalt modifiers, but there is room for improvement in storage stability and mechanical stability.

Furthermore, since all the materials exemplified above are in the form of emulsion mainly using an anionic surfactant, there is the problem that when used as an asphalt modifier, the material does not easily mix with cationic asphalt emulsion which is a common asphalt emulsion, and cannot be used for modifying the cationic asphalt emulsion.

In order to solve the problem, the inventors developed an asphalt modifier in the form of aqueous emulsion dispersion using, as an emulsifier for emulsifying and dispersing a thermoplastic elastomer, at least one member selected from the group consisting of styrenated phenol polyalkylene oxide adduct, polyalkylene polyamine polyalkylene oxide adduct, multivalent alcohol fatty acid esters, multivalent alcohol fatty acid ester polyalklene oxide adduct and benzylated phenol polyalkylene oxide adduct, and a cationic surfactant. The asphalt modifier can be mixed and dissolved in heated asphalt by a simple method, can improve the flowing resistance, toughness and low temperature flexibility of asphalt without losing workability, and has improved stability over time and mechanical stability (JP-A-2001-98159).

The asphalt modifier in the form of aqueous emulsion dispersion disclosed in JP-A-2001-98159 is superior to conventional asphalt modifiers, but the storage stability and mechanical stability are not satisfactory because a nonionic surfactant and a cationic surfactant which has low emulsion dispersing ability are used together.

The present invention has been made in order to solve the problem of unsatisfactory storage stability and mechanical stability in JP-A-2001-59053 and JP-A-2001-98159.

As a result of the intensive studies, the present inventors found that when a complex of a cationic surfactant and an anionic surfactant is partially formed, since the complex has a structure partially similar to that of the anionic surfactant (or cationic surfactant), the affinity for the anionic surfactant (or cationic surfactant) can be improved, the emulsion dispersibility can be enhanced, and stability over time and mechanical stability can also be increased. It was also found that foaming caused by the anionic surfactant (or cationic surfactant) in the step of removing the solvent could be prevented, and the present invention has been accomplished.

That is, the first aqueous emulsion dispersion of the present invention is an aqueous emulsion dispersion of thermoplastic elastomer obtained by emulsifying and dispersing thermoplastic elastomer by using three different kinds of surfactant of a nonionic surfactant, anionic surfactant and a cationic surfactant.

The second aqueous emulsion dispersion of the present invention is that in the first aqueous emulsion dispersion, the aqueous emulsion dispersion is an anionic aqueous emulsion dispersion obtained by emulsifying and dispersing using the cationic surfactant in an amount smaller than that of the anionic surfactant.

The third aqueous emulsion dispersion of the present invention is that in the second aqueous emulsion dispersion, the cationic surfactant is added in an amount of 0.1 to 50.0 parts by weight (hereinafter part) based on 100 parts of the anionic surfactant.

The fourth aqueous emulsion dispersion of the present invention is that in the first aqueous emulsion dispersion, the aqueous emulsion dispersion is a cationic aqueous emulsion dispersion obtained by emulsifying and dispersing using the anionic surfactant in an amount smaller than that of the cationic surfactant.

The fifth aqueous emulsion dispersion of the present invention is that in the fourth aqueous emulsion dispersion, the anionic surfactant is added in an amount of 0.1 to 50.0 parts based on 100 parts of the cationic surfactant.

The sixth aqueous emulsion dispersion of the present invention is that in the first aqueous emulsion dispersion, the nonionic surfactant is styrenated phenol polyalkylene oxide adduct.

The seventh aqueous emulsion dispersion of the present invention is that in the sixth aqueous emulsion dispersion, monostyrenated phenol polyalkylene oxide adduct, distyrenated phenol polyalkylene oxide adduct, and tri or more styrenated phenol polyalkylene oxide adduct are contained in a weight ratio of 10 to 20 : 40 to 55 : 30 to 45 as the styrenated phenol polyalkylene oxide adduct, the total amounting to 100.

The eighth aqueous emulsion dispersion of the present invention is that in the first aqueous emulsion dispersion, the nonionic surfactant is benzylated phenol polyalkylene oxide adduct.

The ninth aqueous emulsion dispersion of the present invention is that in the eighth aqueous emulsion dispersion, monobenzylated phenol polyalkylene oxide adduct, dibenzylated phenol polyalkylene oxide adduct, and tri or more benzylated phenol polyalkylene oxide adduct are contained in a weight ratio of 10 to 20 : 40 to 55 : 30 to 45 as the benzylated phenol polyalkylene oxide adduct, the total amounting to 100.

The tenth aqueous emulsion dispersion of the present invention is that in the second aqueous emulsion dispersion, the dispersion further comprises a cellulose derivative as a thickener.

The eleventh aqueous emulsion dispersion of the present invention is that in the fourth aqueous emulsion dispersion, the solution further comprises a nonionic cellulose derivative and/or a cationic polymer as a thickener.

The first process for producing an aqueous emulsion dispersion of the present invention is a process which comprises, dissolving a nonionic surfactant, an anionic surfactant and a cationic surfactant into a solution comprising a thermoplastic elastomer and an organic solvent, thereby preparing a solution, mixing the solution with water to emulsify, and removing the organic solvent.

The second process for producing an aqueous emulsion dispersion of the present invention is that in the first process, the amount of the cationic surfactant is smaller than that of anionic surfactant.

The third process for producing an aqueous emulsion dispersion of the present invention is that in the first process, the amount of the anionic surfactant is smaller than that of cationic surfactant.

The fourth process for producing an aqueous emulsion dispersion is that in the first process, the process further comprises, after removing the organic solvent, adding and dissolving a thickener.

When used as an aqueous pressure-sensitive adhesive, the thermoplastic elastomer to be used in the present invention acts as a component which improves the retaining force at high temperature by being mixed into an acrylic aqueous pressure-sensitive adhesive. When used as an asphalt modifier, the thermoplastic elastomer serves as a component which improves the softening point, viscoelasticity, toughness, high temperature viscosity and low temperature flexibility, as the elastomer has a good compatibility with asphalt when added thereto. And, when added to an SBR latex for aqueous chipping-resistant coating, the elastomer plays the role of improving chipping resistance and adhesion as the elastomer has a good compatibility with SBR.

As the thermoplastic elastomer, any thermoplastic elastomers can be used without limitation as far as they have been previously used for the above purposes. Examples thereof include a block copolymer which is used as a hot melt adhesive, represented by the formula: A-B-A, $(A-B)_n$, $B-(A-B)_n$ or $(A-B)_n-A$ (in which A is a non-elastic polymer block having a secondary transition temperature of at least 25°C, B is an elastic polymer block having a secondary transition temperature of at most 10°C, and n is an integer of at least 2).

Examples of the non-elastic polymer block include a homopolymer block of a monomer selected from monovinyl aromatic hydrocarbons such as styrene and α-methylstyrene or a copolymer block of two or more of them: a taper-type copolymer block of a monovinyl aromatic hydrocarbon and an aliphatic conjugated diene compound of the B block component mentioned below, and a random copolymer block of a monovinyl aromatic hydrocarbon and an aliphatic conjugated diene compound of the B block component mentioned below. Concrete examples of the blocks include a styrene polymer, a copolymer of styrene and α-methylstyrene, a taper-type copolymer of styrene and butadiene or isoprene, and a random copolymer of styrene and butadiene or isoprene. In terms of the molecular weight of the block, a block having a molecular weight of 1,000 to 200,000, preferably 10,000 to 50,000 is used.

Examples of the elastic polymer block include a homopolymer block of a monomer selected from aliphatic conjugated diene compounds such as butadiene and isoprene, a copolymer block composed of two or more of the aforementioned monomers, a taper-type copolymer block of an aliphatic conjugated diene compound and a monovinyl aromatic compound, a random copolymer block of an aliphatic conjugated diene compound and a monovinyl aromatic compound, and a polymer block obtained by hydrogenating these polymer blocks. Concrete examples of the block include blocks such as a butadiene polymer, an isoprene polymer, a copolymer of butadiene and isoprene, a taper-type copolymer of styrene and butadiene or isoprene, a random copolymer of styrene and butadiene or isoprene, a hydrogenated butadiene polymer, and a hydrogenated copolymer of styrene and butadiene. In terms of the molecular weight of the block, a block having a molecular weight of 5,000 to 500,000, preferably 100,000 to 350,000 is used.

The content of the non-elastic polymer block in the block copolymer is preferably 10 to 70 %, more preferably 20 to 40 % based on the total polymers. When the content is outside the aforementioned range, the characteristics as a thermoplastic elastomer become difficult to be exhibited.

The molecular weight of the block copolymer is preferably 10,000 to 700,000, more preferably 100,000 to 500,000. When the molecular weight is too low, the mechanical strength of the film obtained from the latex tends to be insufficient. When the molecular weight is too high, the viscosity in emulsification becomes too high, emulsification becomes incomplete or difficult, and thus the properties of the resulting latex tends to be adversely affected.

Concrete examples of the block copolymer include an SBS block copolymer, an SIS block copolymer and a hydrogenated SBS block copolymer. These may be used alone or in a combination of two or more.

The block copolymer can be obtained by a method of successively polymerizing monomers block by block in the presence of a living polymerization initiator, a method of obtaining a block copolymer by introducing two or more

monomers having different reactivity simultaneously and polymerizing, and a method of coupling the living block copolymers with each other, which is obtained by using the aforementioned initiator.

As the polymer solution used for preparing a block copolymer latex from the block copolymer, the polymerization solution may be used as it is, or may be used by dissolving the solid of the block copolymer in a solvent such as benzene, toluene, xylene, cyclohexane, cyclooctane, chloroform, carbon tetrachloride, trichlene and methane dichloride. It is preferable that the polymer solution is usually used in a concentration range of 5 to 30 %.

In the present invention, in order to emulsify and disperse the thermoplastic elasotmer, three kinds of different surfactants of a nonionic surfactant, an anionic surfactant and a cationic surfactant are used.

When three kinds of different surfactants of a nonionic surfactant, an anionic surfactant and a cationic surfactant in an amount smaller than that of the anionic surfactant are used for emulsifying and dispersing the thermoplastic elastomer, a complex of the cationic surfactant and the anionic surfactant is partially formed, and the complex has a structure partially similar to that of the anionic surfactant, whereby the affinity for an anionic surfactant is improved, and the emulsifying and dispersing force of the anionic surfactant can be further enhanced and finally, stability over time and mechanical stability of the emulsion can be improved. In addition, as a complex (usually water-insoluble) of anionic surfactant and cationic surfactant is formed, water resistance is improved and foaming due to the anionic surfactant in the step of removing the solvent can be prevented. Furthermore, since the amount of cationic surfactant is smaller than the amount of anionic surfactant, the obtained emulsion dispersion of a thermoplastic elastomer is an anionic aqueous emulsion dispersion which can be used for modifying anionic water paint or adhesive, or as an asphalt modifier. Also, since a nonionic surfactant having no influence on the ionic property is used in addition to the anionic surfactant and the cationic surfactant, an anionic aqueous emulsion dispersion with excellent emulsifying and dispersing property can be obtained.

Partial formation of the complex of anionic surfactant and cationic surfactant means that when a complex is formed, not all of the anionic surfactant is converted into the complex because the anionic surfactant is used in an amount larger than that of the cationic surfactant.

In addition, when three kinds of different surfactants of a nonionic surfactant, a cationic surfactant and an anionic surfactant in an amount smaller than that of the cationic surfactant are used for emulsifying and dispersing the thermoplastic elastomer, a complex of cationic surfactant and anionic surfactant is partially formed, and the complex has a structure partially similar to that of the cationic surfactant, whereby the affinity for a cationic surfactant is improved, the emulsifying and dispersing force of the caationic surfactant can be enhanced and finally, stability over time and mechanical stability of the emulsion can be improved. Moreover, since the complex is formed, foaming due to the cationic surfactant in the step of removing the solvent can be prevented. In addition, since the amount of the anionic surfactant is smaller than the amount of the cationic surfactant, the obtained emulsion dispersion of a thermoplastic elastomer is a cationic aqueous emulsion dispersion which can be used for modifying cationic water paint or adhesive, or a cationic asphalt emulsion which is a common asphalt emulsion. When coated on an inorganic material such as cement mortar or stone material, the degrading rate of the emulsion is favorably increased. Also, since a nonionic surfactant having no influence on the ionic property is used in addition to the anionic surfactant and the cationic surfactant, a cationic aqueous emulsion dispersion with excellent emulsifying and dispersing property can be obtained.

Partial formation of a complex of a cationic surfactant and an anionic surfactant means that when a complex is formed, not all the cationic surfactant is converted into the complex because the cationic surfactant is used in an amount larger than that of the anionic surfactant.

Examples of the nonionic surfactant include at least one kind of styrenated phenol polyalkylene oxide adduct, polyalkylene polyamine polyalkylene oxide adduct, multivalent alcohol fatty acid ester, multivalent alcohol fatty acid ester polyalkylene oxide adduct and benzylated phenol polyalkylene oxide adduct (hereinafter referred to as "specific emulsifying agent" in some cases) and other usual nonionic surfactants besides them. These may be used alone or in a combination of two or more.

When the specific emulsifying agent is used as the nonionic surfactant, the stability over time and mechanical stability of the resulting aqueous emulsion dispersion and modifier obtained by using the aqueous emulsion dispersion can be rendered better. In addition, when emulsifying and dispersing the thermoplastic elastomer, by preventing foaming in the step of removing, under reduced pressure, the organic solvent (e.g. toluene, xylene, benzene, cyclohexane, cyclooctane etc.) used for preparing a thermoplastic elastomer solution, removal of the solvent can be easily conducted in a short time and an aqueous dispersion which is stable from a viewpoint of storage can be prepared.

The styrenated phenol polyalkylene oxide adduct refers to an adduct obtained by addition polymerization of a $C_{2-4}$ alkylene oxide (e.g. ethylene oxide, propylene oxide, butylene oxide) to at least one member selected from the group consisting of monostyrenated phenol, distyrenated phenol and tri or more styrenated phenol. For example, a distyrenated phenol polyethylene oxide adduct is represented by the following formula.

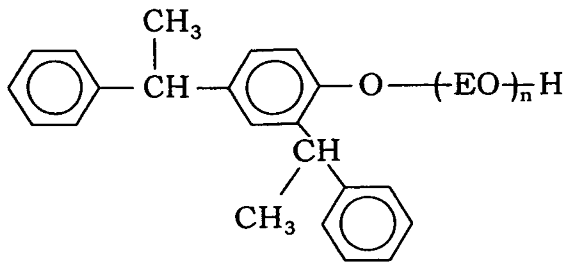

(n =10 to 30)

The tri or more styrenated phenol means that a small amount of tetra or more styrenated phenol may be mixed into tristyrenated phenol.

Preferable examples of the styrenated phenol polyalkylene oxide adduct include those containing monostyrenated phenol polyalkylene oxide adduct with an average of 20 moles of ethylene oxide, distyrenated phenol polyalkylene oxide adduct and tri or more styrenated phenol polyalkylene oxide adduct in a weight ratio of (10 to 20) : (40 to 55 ): (30 to 45), the total amounting to 100.

As the styrenated phenol polyalkylene oxide adduct, each of monostyrenated phenol polyalkylene oxide adduct, distyrenated phenol polyalkylene oxide adduct and tri or more styrenated phenol polyalkylene oxide adduct may be used alone. However, it is preferable to use a mixture of these from the viewpoint of wide distribution of emulsifying property.

The polyalkylene polyamine polyalkylene oxide adduct refers to an adduct obtained by addition polymerization of a $C_{2-4}$ alkylene oxide to polyalkylene polyamine such as polyethyleneimine, tetraethylenepentamine, pentaethylenehexamine and hexaethyleneheptamine (e.g. adduct obtained by block or random addition polymerization of ethylene oxide and propylene oxide or butylene oxide).

Preferable examples of the polyalkylene polyamine polyalkylene oxide adduct include a polyfuntional polyether compound containing nitrogen obtained by random or block addition polymerization of ethylene oxide and propylene oxide to polyethyleneimine (having a molecular weight of, for example, 1,200 to 1,800).

The multivalent alcohol fatty acid ester comprises, for example, a multivalent alcohol of 3 to 8 valent and a $C_{8-22}$ saturated or unsaturated fatty acid. In other words, in the case of using sorbitan, those in which an average of 2 to 3 hydroxyl groups remain per molecule can be given, and in the case of using sucrose, those in which an average of 5 to 7 hydroxyl groups remain per molecule can be given.

Examples of the multivalent alcohol include glycerin, diglycerin, sorbitol and sorbide, as well as the aforementioned sorbitan and sucrose.

Examples of the saturated or unsaturated fatty acid include saturated fatty acids such as lauric acid, palmitic acid, stearic acid, behenic acid and $C_{8-22}$ linear or branched synthetic saturated fatty acids, and unsaturated fatty acids such as oleic acid, linoleic acid and linolenic acid.

Preferable examples of the multivalent alcohol fatty acid ester include sorbitan oleic acid ester (monoesters, diesters, triesters and tetraesters are distributed, with an average of 2 to 3 hydroxyl groups present per molecule).

The multivalent alcohol fatty acid ester polyalkylene oxide adduct is obtained by addition polymerization of a $C_{2-4}$ alkylene oxide (e.g. ethylene oxide, propylene oxide, butylene oxide) to a multivalent alcohol fatty acid ester comprising a multivalent alcohol of 3 to 8 valent and a $C_{8-22}$ saturated or unsaturated fatty acid. In the multivalent alcohol fatty acid ester, 2 to 3 hydroxyl groups remain per molecule in the case of using sorbitan, and an average of 5 to 7 hydroxyl groups remain in the case of using sucrose.

As the multivalent alcohol and the saturated or unsaturated fatty acid, the same multivalent alcohols and saturated or unsaturated fatty acids as those used for preparing the multivalent alcohol fatty acid ester are used.

Preferable examples of the multivalent alcohol fatty acid ester polyalkylene oxide adduct include Tween 60, Tween 80 and Tween 85 available from Atlas Company, and Sorgen TW-20, Sorgen TW-60, Sorgen TW-80 available from DAI-ICHI KOUGYO SEIYAKU CO., LTD.

The benzylated phenol polyalkylne oxide adduct refers to an adduct obtained by addition polymerization of a $C_{2-4}$ alkylene oxide (e.g. ethylene oxide, propylene oxide, butylene oxide) to at least one member selected from the group consisting of monobenzylated phenol, dibenzylated phenol and tri or more benzylated phenol. For example, dibenzylated phenol polyethylene oxide adduct is represented by the following formula.

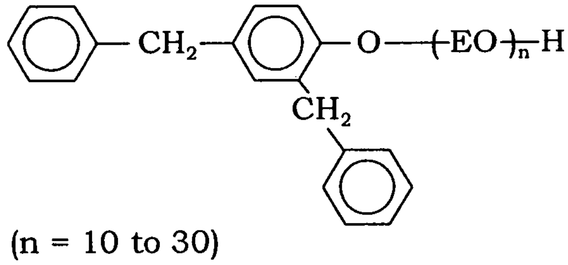

(n = 10 to 30)

The tri or more benzylated phenol means that a small amount of tetra or more benzylated phenol may be mixed into tribenzylated phenol.

Preferable examples of the benzylated phenol polyalkylene oxide adduct include those containing monobenzylated phenol ethylene oxide adduct with an average of 20 moles of ethylene oxide, dibenzylated phenol ethylene oxide adduct and tri or more benzylated phenol ethylene oxide adduct in a weight ratio of (10 to 20) : (40 to 55 ): (30 to 45), the total amounting to 100.

As the benzylated phenol polyalkylene oxide adduct, each of monobenzylated phenol polyalkylene oxide adduct, dibenzylated phenol polyalkylene oxide adduct and tri or more benzylated phenol polyalkylene oxide adduct may be used alone. However, it is preferable to use a mixture of these from the viewpoint of wide distribution of emulsifying property.

The aforementioned specific emulsifying agents may be used alone or in a combination of two or more. Among them, styrenated phenol polyalkylene oxide adduct and benzyiated phenol polyalkylene oxide adduct are preferable since they have a high multidispersity (both the hydrophobic group and hydrophilic group being widely distributed), and when combined with the high multidispersity of the thermoplastic elastomer to be emulsified, good emulsifying ability is exhibited, thereby decreasing the trouble of foaming.

Examples of the usual nonionic surfactant other than the specific nonionic surfactant include alkyl polyoxyethylene ether (in which the alkyl group has 8 to 22 carbon atoms), alkylphenol polyoxyethylene ether (in which the alkyl group has 8 to 12 carbon atoms), alkyl polyoxyethylene polyoxypropylene ether (in which the alkyl group has 8 to 22 carbon atoms; either polyoxyethylene block or polyoxypropylene block may be addition-polymerized first, or may be randomly addition-polymerized), fatty acid polyoxyethylene ester (fatty acid being a $C_{8-22}$ saturated or unsaturated fatty acid), polyoxyethylene (cured) castor oil, alkylpolyoxyethyleneamine (in which the alkyl group has 8 to 18 carbon atoms), and alkylpolyoxyethyleneamide (in which the alkyl group has 8 to 18 carbon atoms).

When using the nonionic surfactant, the aforementioned specific emulsifying agent may be used alone. Alternatively, a usual nonionic surfactant other than the specific emulsifying agent may be used alone while these may be used in combination. When the specific emulsifying agent and the usual nonionic surfactant other than the specific emulsifying agent are used in combination, the proportion of these agents may be determined depending on the purpose of use.

As the anionic surfactant used in the present invention, any anionic surfactants can be used without limitation as far as they can be used for preparing an aqueous emulsion dispersion of the thermoplastic elastomer.

Examples of the anionic surfactant include a carboxylic acid-type anionic surfactant, a sulfate-type anionic surfactant, a sulfonic acid-type anionic surfactant, a phosphate-type anionic surfactant and the like. These may be used alone or in a combination of two or more.

Examples of the carboxylic acid-type anionic surfactant include a fatty acid salt represented by the formula:

$$RCOOM$$

wherein R is a $C_{7-21}$ saturated or unsaturated hydrocarbon group, M is a cation such as Na, K, $NH_4$ or alkanolamine·H;

rhodinate which is the salt of resin acid obtained by extracting pine and contains abietate, for example, represented by:

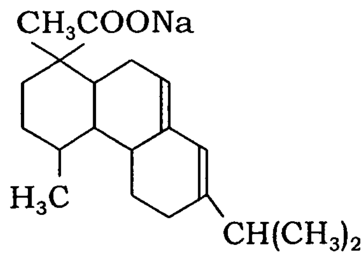

as a main component;

naphthenate which is the salt of carboxylic acid, contained in petroleum and has a structure represented by the formula:

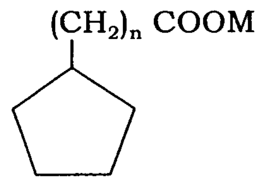

wherein M is a cation such as Na, K or alkanolamine·H, and n is an integer of at least 1;

ethercarboxylate represented by the fomula:

$$R(OC_2H_4)_nOCH_2COOM$$

wherein R is $C_{10-18}$ alkyl group or alkylphenyl group, M is a cation such as Na or K, and n is an integer of at least 2;

alkenylsuccinate represented by the formula:

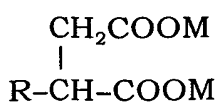

wherein R is a $C_{8-18}$ unsaturated hydrocarbon group, and M is a cation such as Na;

N-acylsarcosinate represented by the formula:

$$RCON(CH_3)CH_2COOM$$

wherein R is a $C_{11-18}$ saturated or unsaturated hydrocarbon group, and M is a cation such as Na; and

N-acylglutamate represented by the formula:

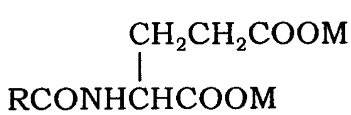

wherein R is a $C_{11-18}$ saturated or unsaturated hydrocarbon group, and M is a cation such as Na or alkanolamine·H.

These may be used alone or in a combination of two or more.

Examples of the sulfate-type anionic surfactant include primary alkyl sulfate represented by the formula:

$$ROSO_3M$$

wherein R is a $C_{8-18}$ saturated or unsaturated hydrocarbon group, and M is a cation such as Na, K, $NH_4$ or alkanolamine-H;

secondary alkyl sulfate represented by the formula:

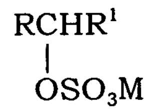

wherein $RR^1$ CH- is a group obtained by removing an OH group from a secondary alcohol having a $C_{12-16}$ linear or branched alkyl group, and M is a cation such as Na;

alkyl polyoxyethylene sulfate represented by the formula:

$$R(OC_2H_4)_nOSO_3M$$

wherein R is a $C_{12-18}$ saturated or unsaturated hydrocarbon group, M is a cation such as Na, K, $NH_4$ or alkanolamine-H and n is an integer of at least 2;

alkylpheyl polyoxyethylene sulfate represented by the formula:

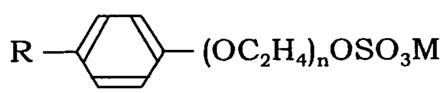

wherein R is a $C_{8-12}$ alkyl group, M is a cation such as Na, and n is an integer of at least 2;

monoacylglycerin sulfate represented by the formula:

$$RCOOCH_2CH(OH)\ CH_2OS_3M$$

wherein R is a $C_{11-17}$ saturated or unsaturated hydrocarbon group, and M is a cation such as Na;

acylamino sulfate represented by the formula:

$$RCONHC_2H_4OSO_3M$$

wherein R is a $C_{11-17}$ saturated or unsaturated hydrocarbon group, and M is a cation such as Na;

sulfated oil, in other words the salt of sulfate ester formed by sulfo-esterifying the double bond or the hydroxyl group in fat and oil such as olive oil, castor oil, cottonseed oil, rapeseed oil and beef tallow (acylglycerin is partially hydrolyzed or sulfated); and

sulfonated alkyl aliphatic carboxylate, in other words the salt of the compound which is propyl or butyl ester of aliphatic carboxylic acid having a double bond and a hydroxyl group such as oleic acid or ricinolic acid. These may be used alone or in a combination of two or more.

Examples of the sulfonated-type anionic surfactant include α-olefinsulfonates, i.e., α-olefinsulfonate (AOS) which is generally obtained as a mixture of $RCH{=}CHCH_2SO_3M$ (alkenyl) and

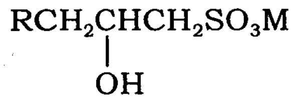 (hydroxyl body)

(wherein M is a cation such as Na or K), secondary alkane sulfonate obtained by neutralizing $C_{8-20}$ n-paraffin with alkaline substance such as $SO_2$ sulfooxylate or $Cl_2$ sulfochlorinate, α-sulfonate such as methyl ester or isopropyl ester of $C_{12-18}$ fatty acid, and α-sulfofatty acid ester salt;

acyl isethionate represented by the formula:

$$RCOOC_2H_4SO_3M$$

(wherein R is a $C_{11-17}$ saturated or unsaturated hydrocarbon group and M is a cation such as Na);

N-acyl-N-methyltaurinic acid represented by the formula:

$$RCON(CH_3)C_2H_4SO_3M$$

(wherein R is a $C_{11-17}$ saturated or unsaturated hydrocarbon group, and M is a cation such as Na);

dialkyl sulfosuccinic acid represented by the formula:

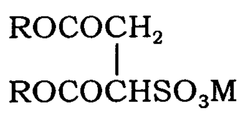

(wherein R is a $C_{2-20}$ linear or branched alkyl group, and M is a cation such as Na);

alkylbenzenesulfonate (ABS, LAS) represented by the formula:

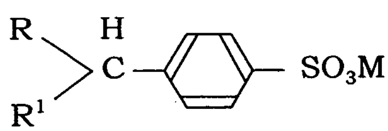

(wherein $RR^1CH$- is a $C_{9-13}$ linear or branched alkyl group and M is a cation such as Na or K);

alkylnaphthalenesulfonate represented by the formula:

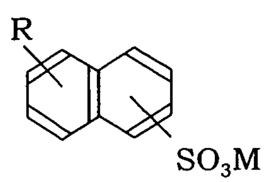

(wherein R is a $C_{3-5}$ linear or branched alkyl group and M is a cation such as Na);

alkyl diphenyl ether disulfonate represented by the formula:

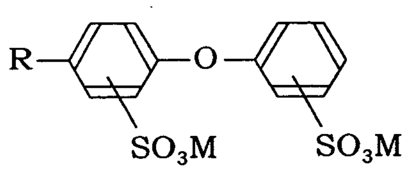

(wherein R is a $C_{12}$ alkyl group and M is a cation such as Na); petroleum sulfonate; and lignin sulfonate. These may be used alone or as a combination of 2 or more.

Examples of the phosphate type anionic surfactant include alkyl sulfate represented by the formula:

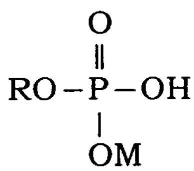 or 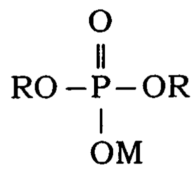

(1) (2)

(wherein R is a $C_{8-18}$ alkyl group and M is a cation such as H, Na, K, $NH_4$ or alkanolamine-H), existing as (1) phosphoric monoester salt, (2) phosphoric diester salt or (3) a mixture of (1) and (2);

alkylpolyoxyethylene phosphate represented by the formula:

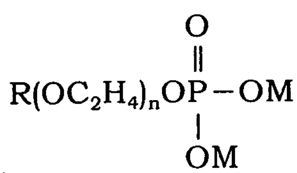

(wherein R is a $C_{12-18}$ alkyl group, M is a cation such as H, Na, K or alkanolamine·H and n is an integer of at least 2, usually existing as a mixture with diester salt); and

alkylpolyoxyethylene phosphate represented by the formula:

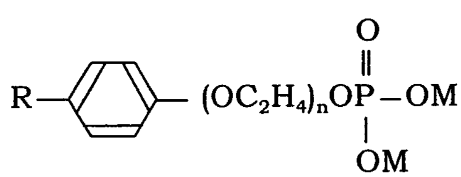

(wherein R is a $C_{8-12}$ alkyl group, M is a cation such as H, Na, K or alkanolamine-H and n is an integer of at least 2), usually existing as a mixture of monoester salt and diester salt.

Additional examples include sulfate ester salt (Na salt, K salt) of the styrenated phenolpolyalkylene oxide adduct, and sulfate ester salt (Na salt, K salt) of the benzylated phenolpolyalkylene oxide adduct. These may be used alone or in a combination of two or more.

Examples of the alcohol which is the raw material for the anionic surfactant include synthetic primary alcohols such as 2-ethylhexanol, n-octanol, decanol, dodecanol, tetradecanol, hexadecanol, octadecanol, alfol and dobanol; synthetic secondary alcohols such as tagitol S, softanol and oxoalcohol; and benzyl alcohol. Examples of the phenol are $C_{8-22}$ phenols such as octylphenol, nonylphenol and dedecyphenol; styrenated phenol; and benzylated phenol.

Examples of the amine include higher amines such as laurylamine, laurylmethylamine and dioleylamine. Examples of the carboxylic acid include lauric acid, myristic acid, palmitic acid, oleic acid, stearic acid, behenic acid and rhodinic acid.

The aforementioned anionic surfactant may be used alone or in a combination of two or more. Among them, sulfate ester salt (Na salt, K salt) of the styrenated phenolpolyalkylene oxide adduct and sulfate ester salt (Na salt, K salt) of the benzylated phenolpolyalkylene oxide adduct are preferable from the viewpoint of good compatibility with the specific nonionic surfactant. Also the carboxylic acid-type anionic surfactant is preferable from the viewpoint that the complex produced by the reaction with the cationic surfactant exhibits good adsorption to the element to be emulsified.

As the cationic surfactant used in the present invention, any cationic surfactants can be used without limitation as far as they can be used for preparing an aqueous emulsion dispersion of the thermoplastic elastomer.

Examples of the cationic surfactant include an alkylamine salt-type cationic surfactant, an acylamine salt-type cationic surfactant, a quaternary ammonium salt-type cationic surfactant, an amide bond-containing ammonium salt-type cationic surfactant, an ester bond or ether bond-containing ammonium salt-type cationic surfactant, imidazoline or imidazolium salt-type cationic surfactant. These may be used alone or in a combination of two or more.

Examples of the alkylamine salt-type cationic surfactant and the acylamine salt-type cationic surfactant include primary amine salt having a $C_{12-18}$ alkyl group (hydrochloride or acetate), acylaminoethyldiethylamine salt having a $C_{17}$ alkyl group or alkenyl group (hydrochloride, formate, acetate or lactate), N-alkylpolyalkylenepolyamine salt having a $C_{12-18}$ alkyl group (hydrochloride or acetate, the alkylene group has 2 to 3 carbon atoms, repeat of alkyleneamine group is 1 to 3), fatty acid polyethylenepolyamide salt having a $C_{17}$ alkyl group or alkenyl group (hydrochloride, repeat of ethyleneamine group is 2), and diethylaminoethylamide salt having a $C_{17}$ alkyl group (hydrochloride, acetate or lactate). These may be used alone or in a combination of two or more.

Examples of the quaternary ammonium salt-type cationic surfactant and the amide bond-containing ammonium salt-type cationic surfactant include alkyl or alkenyl trimethylammonium salt having a $C_{12-18}$ alkyl group or a $C_{18}$ alkenyl group (anion is $Cl^-$, $Br^-$, or $CH_3SO_4^-$), dialkyl or dialkenyl dimethylammonium salt having a $C_{12-18}$ alkyl group or a $C_{18}$ alkenyl group (anion is $Cl^-$, $Br^-$, or $CH_3SO_4^-$), alkyl or alkenyl dimethylbenzylammonium salt having a $C_{12-18}$ alkyl group or a $C_{18}$ alkenyl group (anion is $Cl^-$), alkylpyridium salt having a $C_{12-18}$ alkyl group (anion is $Cl^-$, $Br^-$), acylaminoethylmethyldiethylammonium salt having a $C_{17}$ alkyl group or a $C_{17}$ alkenyl group (anion is $CH_3SO_4^-$), acylaminopropyldimethylbenzylammonium salt having a $C_{13}$ alkyl group (anion is $Cl^-$), acylaminopropyldimethylhydroxyethylammonium salt having a $C_{17}$ alkyl group (anion is $ClO_4^-$), acylaminoethylpyridinium salt having a $C_{11}$ alkyl group (anion is $Cl^-$), diacylaminoethyldimethylammonium salt having a $C_{17}$ alkyl group or a $C_{17}$ alkenyl group (anion is $Cl^-$, one of methyl groups may be a hydroxyethyl group). Additional examples include compounds obtained by cationizing a tertiary amine such as trialkyl or alkenyldialkylamine using a quaternarizing agent such as xylenyl dichloride. These may be used alone or in a combination of two or more.

Examples of the ester bond or ether bond-containing ammonium salt-type cationic surfactant include diacyloxyethylmethylhydroxyethylammonium salt having a $C_{17}$ alkyl group or a $C_{17}$ alkenyl group (anion is $CH_3SO_4^-$), and alkyloxymethylpyridinium salt having a $C_{16}$ alkyl group (anion is $Cl^-$). These may be used alone or in a combination of two or more.

Examples of the imidazoline or imidazolium,salt-type cationic surfactant include alkyl or alkenylimidazoline having a $C_{11-17}$ alkyl group or a $C_{17}$ alkenyl group (acetate, carbonate, quaternarized salt), 1-hydroxyethyl-2-alkyl or alkenylimidazoline having a $C_{11-17}$ alkyl group or a $C_{17}$ alkenyl group (including quaternarized salt), and 1-acylaminoethyl-2-alkylimidazolium salt having a $C_{17}$ alkyl group or alkenyl group (anion is $CH_3SO_4^-$, $C_2H_5SO_4^-$, alkyl group in the second position is methyl group or ethyl group). These may be used alone or in a combination of two or more.

The aforementioned cationic surfactants may be used alone or in a combination of two or more. Among them, the quaternary ammonium salt-type cationic surfactant is preferable from the viewpoint of the ability of forming a complex with the anionic surfactant.

The amount of using the aforementioned nonionic surfactant, anionic surfactant and cationic surfactant is 100 parts in total, and the nonionic surfactant, including the specific nonionic surfactant, is used in an amount of preferably 10 to 90 parts, more preferably 30 to 70 parts, most preferably 40 to 60 parts. The anionic surfactant and the cationic surfactant is used in a sum of 10 to 90 parts, more preferably 30 to 70 parts, most preferably 40 to 60 parts. This range is preferable from the viewpoint of the emulsification property of the mixture of thermoplastic elastomer and solvent when preparing the thermoplastic elastomer aqueous dispersion, prevention of foaming in the step of removing the solvent, and the storage stability of aqueous emulsion dispersion of thermoplastic elastomer (hereinafter also referred to as "thermoplastic elasotmer aqueous emulsion dispersion"). When the amount of the nonionic surfactant, including the specific emulsifying agent, is less than 10 parts, the effect of improving emulsion dispersing ability, which is brought about by using the nonionic surfactant, tends to be difficult to obtain. When the amount exceeds 90 parts, improvement of the emulsification property of the mixture of thermoplastic elastomer and solvent when preparing the thermoplastic elastomer aqueous emulsion dispersion, which is brought about by using the anionic surfactant and the cationic surfactant, tends to be difficult. In addition, since the amount of complex of anionic surfactant and cationic surfactant

produced decreases, the effect of preventing foaming in the solvent removing step tends to be difficult to obtain. When the complex of anionic surfactant and cationic surfactant is formed and the specific emulsifying agent or the nonionic surfactant containing the same is used, it is preferable because a synergistic foaming prevention effect can be obtained.

The proportion of the cationic surfactant added to the anionic surfactant for obtaining an anionic aqueous emulsion dispersion is difficult to define, primarily because the proportion is different depending on the type and amount of the nonionic surfactant used together. However, the proportion is generally 0.1 to 50.0 parts, more preferably 0.5 to 40.0 parts, most preferably 1.0 to 30.0 parts based on 100 parts of the anionic surfactant. When the proportion of the cationic surfactant is too small, the effect brought about by the formation of the complex of anionic surfactant and cationic surfactant is not sufficiently exhibited. When the proportion is too large, the prepared thermoplastic elastomer aqueous emulsion dispersion does not have sufficient anionic property. Under the aforementioned conditions, it is important to adjust the number of cationic groups of the cationic surfactant used together to at most 50 % relative to the number of anionic groups of the anionic surfactant to be used, in order to obtain the effect of the present invention.

Examples of the combination of anionic surfactant and cationic surfactant include a combination of 100 parts of a sodium salt of a compound obtained by addition-polymerizing 13 moles of ethylene oxide to phenol to which an average of 2 styrene groups are added and sulfating it (styrenated phenol EOA sodium sulfate) and 3 to 20 parts of lauryldimethylbenzylammonium chloride (LDMBAC), a combination of 100 parts of rosin K (potassium salt of natural anionic compound) and 3 to 30 parts of lauryldimethylbenzylammonium chloride (LDMBAC), a combination of 100 parts of a sodium salt of a compound obtained by addition-polymerizing 13 moles of ethylene oxide to phenol to which an average of 2 styrene groups are added and sulfating it (styrenated phenol EOA sodium sulfate) and 1 to 30 parts of lauryldimethylammonium ethylsulfate (LDMEAS), and a combination of 100 parts of rosin K (potassium salt of natural anionic compound) and 1 to 30 parts of lauryldimethylammonium ethylsulfate (LDMEAS). Among these, the combination of styrenated phenol EOA sodium sulfate or rosin K and LDMBAC is preferable from the viewpoint that the compatibility with the nonionic surfactant is good and the complex of anionic surfactant and cationic surfactant exhibits a good adsorption to the element to be emulsified.

The proportion of the anionic surfactant added to the cationic surfactant for obtaining a cationic aqueous emulsion dispersion is difficult to define, primarily because the proportion is different depending on the type and amount of the nonionic surfactant used together. However, the proportion is generally 0.1 to 50.0 parts, more preferably 0.5 to 40.0 parts, most preferably 1.0 to 30.0 parts based on 100 parts of the cationic surfactant. When the proportion of the anionic surfactant to be incorporated is too small, the effect brought about by the formation of the complex of anionic surfactant and cationic surfactant is not sufficiently exhibited. When the proportion is too large, the prepared thermoplastic elasotmer aqueous dispersion does not have sufficient cationic property. Under the aforementioned conditions, it is important to adjust the number of anionic groups of the anionic surfactant used together to at most 50 % relative to the number of cationic groups of the cationic surfactant to be used in order to obtain the effect of the present invention.

Examples of the combination of cationic surfactant and anionic surfactant include a combination of 100 parts of lauryldimethylbenzylammonium chloride (LDMBAC) and 3 to 20 parts of a sodium salt of a compound obtained by addition-polymerizing 13 moles of ethylene oxide to phenol to which an average of 2 styrene groups are added and sulfating it (styrenated phenol EOA sodium sulfate), a combination of 100 parts of lauryldimethylbenzylammonium chloride (LDMBAC) and 3 to 30 parts of rosin K (potassium salt of natural anionic compound), a combination of 100 parts of lauryldimethylammonium ethylsulfate (LDMEAS) and 1 to 30 parts of a sodium salt of a compound obtained by addition-polymerizing 13 moles of ethylene oxide to phenol to which an average of 2 styrene groups are added and sulfating it (styrenated phenol EOA sodium sulfate), and a combination of 100 parts of lauryldimethylammonium ethylsulfate (LDMEAS) and 1 to 30 parts of rosin K (potassium salt of natural anionic compound). Among these, a combination of LDMBAC and styrenated phenol EOA sodium sulfate or rosin K is preferable from the viewpoint that the compatibility with the nonionic surfactant is good and/or the complex of anionic surfactant and cationic surfactant exhibits a good adsorption to the element to be emulsified.

The aqueous emulsion dispersion of thermoplastic elastomer of the present invention, which can be used as modifying agents, is prepared by emulsifying and dispersing the aforementioned thermoplastic elastomer in the presence of a nonionic surfactant, preferably a nonionic surfactant containing a specified emulsifying agent, an anionic surfactant and a cationic surfactant.

The amount of nonionic surfactant, anionic surfactant and cationic surfactant (hereinafter also referred to as "all surfactants") is preferably 1 to 15 parts, more preferably 5 to 13 parts based on 100 parts of the aforementioned thermoplastic elastomer. When the amount of all surfactants is too small, the emulsifying property of the mixture of thermoplastic elastomer and solvent when preparing the aqueous emulsion dispersion becomes inferior. When the amount is too large, there arises problems in production such as foaming occurring in the step of removing the solvent and the time necessary for removing the solvent becoming considerably long.

The proportion of the aforementioned thermoplastic elastomer and all surfactants in the aqueous emulsion dispersion is preferably 40 to 65 %, more preferably 45 to 60 % from the viewpoint of storage stability of the aqueous emulsion dispersion and attaining a viscosity suitable for pumping transport when used as a modifier.

The aqueous emulsion dispersion can be prepared by emulsifying and dispersing the thermoplastic elastomer by, for example, mixing warm water with a melt mixture of solution containing an organic solvent, thermoplastic elastomer and all surfactants by using a line mixer, or adding warm water dropwise to a melt mixture of solution containing an organic solvent, thermoplastic elastomer and all surfactants and removing the organic solvent at 60°C under 720 to 640 mmHg (about 96.0 to 85.3 kPa).

When removing the aforementioned organic solvent, in the case of the previous thermoplastic elastomer aqueous emulsion dispersion except for the aqueous emulsion dispersion described in JP-A-2001-59053 and JP-A-2001-98159, foaming is remarkable and the removal of the solvent takes long. However, in the present invention, as a complex of anionic surfactant and cationic surfactant is formed, foaming can be reduced and the aqueous emulsion dispersion of thermoplastic elastomer can be easily prepared. When the specific emulsifying agent is used as the nonionic surfactant, synergistic effect of further reducing foaming can be expected.

The particle size of the prepared aqueous emulsion dispersion is different depending on the emulsifying method, the amount of emulsifying agent to be used and the concentration of aqueous emulsion dispersion, but is usually at most 5 μm, preferably 0.6 to 3 μm, more preferably 0.8 to 2 μm. When the particle size is too large, the stability tends to be insufficient. Conversely, when the particle size is too small, production becomes difficult because the viscosity becomes high, and the problem of pumping transport is likely to occur.

The anionic aqueous emulsion dispersion of the present invention prepared in this way has an improved emulsification property based on the anionic surfactant, and has good stability over time and mechanical stability because of the partial formation of the complex of anionic surfactant and cationic surfactant, which has good affinity for the anionic surfactant. Also, foaming is little when preparing the anionic aqueous emulsion dispersion. When the anionic aqueous emulsion dispersion is used as an aqueous pressure-sensitive adhesive, the retaining force at high temperature is improved by mixing the adhesive. When added to an SBR latex for aqueous chipping-resistant coating, the ability of improving chipping resistance and adhesion is increased because the anionic aqueous emulsion dispersion has excellent compatibility with SBR. When added to asphalt, the softening point, viscoelasticity, toughness, high temperature viscosity and low temperature flexibility of the asphalt can be improved.

Similarly, the cationic aqueous emulsion dispersion of the present invention prepared in the above way has better emulsification property based on a cationic surfactant, and has good stability over time and mechanical stability because of the partial formation of the complex of anionic surfactant and cationic surfactant. Also, foaming is small when preparing the cationic aqueous emulsion dispersion. When the cationic aqueous emulsion dispersion is used as an aqueous pressure-sensitive adhesive, the retaining force at high temperature is improved by mixing the adhesive. When added to an SBR latex for aqueous chipping-resistant coating, the ability of improving chipping resistance and adhesion is increased because the cationic aqueous emulsion dispersion has excellent compatibility with SBR. When added to asphalt, the softening point, viscoelasticity, toughness, high temperature viscosity and low temperature flexibility of the asphalt can be improved.

When preparing the aqueous emulsion dispersion of the present invention, a thickener may be added. In the case of adding the thickener, an aqueous emulsion dispersion containing a thickener having excellent storage ability is obtained, in which separation of water and thermoplastic elatomer is hardly caused even when stored for a long time.

Examples of the thickener to be added when preparing the anionic aqueous emulsion dispersion include bentonite, aluminosilicate, and cellulose derivatives such as sodium carboxymethyl cellulose, hydroxyethyl cellulose, methyl cellulose, ethyl cellulose, hydroxypropyl methyl cellulose, hydroxyethyl methyl cellulose, hydroxypropyl ethyl cellulose and hydroxyethyl ethyl cellulose. Additional examples include natural polysaccharide polymers such as xanthan gum and lamsan gum. These may be used alone or in a combination of two or more. Among these, cellulose derivatives such as sodium carboxymethyl cellulose, hydroxyethyl cellulose, methyl celluslose, ethyl cellulose, hydroxypropyl methyl cellulose, hydroxyethyl methyl cellulose, hydroxypropyl ethyl cellulose and hydroxyethyl ethyl cellulose and natural polysaccharide polymer such as xanthan gum and lamsan gum are preferable. Inter alia, hydroxyalkyl cellulose such as hydroxyethyl cellulose, hydroxypropyl methyl cellulose and hydroxyethyl methyl cellulose among cellulose derivatives, and xanthan gum and lamsan gum which are natural polysaccharide polymers are preferable.

In addition, examples of the aforementioned thickener used upon preparation of the cationic aqueous emulsion dispersion include bentonite aluminosilicate, nonionic cellulose derivatives such as hydroxyethyl cellulose, methyl cellulose, ethyl cellulose, hydroxypropyl methylcellulose, hydroxyethyl methyl cellulose, hydroxypropyl ethyl cellulose and hydroxyethyl ethyl cellulose, cationic polymers such as dimethylaminoethyl methacrylate methyl chloride quaternary salt polymer and diallyldimethylammonium chloride quaternary salt polymer. These may be used alone or in a combination of two or more. Among these, non-ionic cellulose derivatives such as hydroxyethylcellulose, methylcellulose, ethylcellulose, hydroxypropylmethylcellulose, hydroxyethylmethylcellullose, hydroxypropylethylcellulose and hydroxyethylethylcellulose, and cationic polymers such as dimethylaminoethyl methacrylate methyl chloride quaternary salt polymer and diallyldimethylammonium chloride quaternary salt polymer are preferable. Inter alia, hydroxyalkyl cellulose such as hydroxypropyl methyl cellulose and hydroxyethyl methyl cellulose among the nonionic cellulose derivatives, and quaternary ammonium salt-type cationic polymers such as dimethylaminoethyl methacrylate methyl chloride quaternary salt polymer and diallyldimethylammonium chloride quaternary salt polymer among the cationic polymers are preferable.

When the aforementioned thickener is added, the amount of the thickener is 0.1 to 3.0 parts, preferably 0.1 to 1.8 parts in solid based on 100 parts of the thermoplastic elastomer. When cellulose derivative or natural polysaccharide polymer is used as the thickener, the amount is 0.1 to 2.0 parts, preferably 0.1 to 1.0 part. When cationic polymer is used as the thickener, the amount is 1.0 to 3.0 parts, preferably 1.4 to 1.8 parts. When the amount of the thickener is too small, the effect of using the thickener can not be sufficiently obtained. When the amount of the thickener is too large, there is a tendency that the viscosity increases too much, pumping transport becomes difficult and modifying effects are decreased.

The aqueous emulsion dispersion of the present invention as explained above usually has a solid concentration of 40 to 65 %, particularly 45 to 60 %, and a viscosity of 100 to 700 mPa·sec, particularly 150 to 500 mPa·sec (as measured at 25°C by using a B-type viscometer). By adding the thickener, the dispersion comes to have a solid concentration of 40 to 65 %, particularly 45 to 60 %, and a viscosity of 200 to 6,000 mPa·sec, particularly 350 to 4,000 mPa·sec (as measured at 25°C by using a B-type viscometer).

When the aqueous emulsion dispersion of the present invention is used as a modifier, the aqueous emulsion dispersion is added to the material to be modified (solid) in an amount of 0.5 to 50 %, preferably 1.0 to 30 % on a solid basis. When the amount of the aqueous emulsion dispersion is too small, the modifying effect cannot be sufficiently obtained. When the amount of the aqueous emulsion dispersion is too large, the viscosity of the modified material becomes too high, and this is not practical. In addition the modified material becomes expensive.

The aqueous emulsion dispersion of the present invention may be incorporated with an antioxidant, ultraviolet-ray absorbing agent, antiseptic agent, antifungal agent, defoaming agent, dispersion stabilizer, plasticizer and pigment according to need. In addition, paraffin oil, aroma oil and naphthene oil may also be incorporated.

Further, the aqueous emulsion dispersion of the present invention may be used by mixing with rubber latex such as SBR latex, chloroprene latex, polybutadiene latex and ethylene propylene rubber latex, or emulsion of polymer compound such as acrylic emulsion, vinyl acetate emulsion, EVA emulsion and urethane emulsion, or these latex and emulsion may be used with the emulsion dispersion of the present invention separately without previoius mixing. Since the anionic aqueous emulsion dispersion of the present invention contains a nonionic surfactant as an emulsifying agent, agglomeration is less likely to occur as compared with usual anionic emulsion when mixed with cationic emulsion. However, when mixing with the cationic emulsion, the amount of the anionic aqueous emulsion added is preferably in such a range that the workability is not deteriorated. Similarly, since the cationic aqueous emulsion dispersion of the present invention contains a nonionic surfactant as an emulsifying agent, agglomeration is less likely to occur as compared with usual cationic emulsion when mixed with anionic emulsion. However, when mixing with the anionic emulsion, the amount of the cationic aqueous emulsion added is preferably in such a range that the workability is not deteriorated.

Further, a water-reactive compound such as cement, coal or isocyanate compound may also be added.

Examples of the method of adding oil are the method which comprises extending oil to thermoplastic elastomer to prepare an aqueous emulsion dispersion, the method of adding oil by dissolving at the same time when the thermoplastic elastomer is dissolved into the solvent to prepare a polymer solution, the method which comprises mixing a nonionic and/or anionic emulsion of oil to the anionic aqueous emulsion dispersion of the present invention, and the method which comprises mixing a nonionic and/or cationic emulsion of oil to the cationic aqueous emulsion dispersion of the present invention. The amount of oil to be added is preferably 5 to 300 parts based on 100 parts of the thermoplastic elastomer. Any oil such as paraffin oil, aroma oil and naphthene oil may be used, but naphthene oil is preferable.

By employing such oil, the effect of improving crack resistance, recycling deteriorated asphalt easily and providing flexibility (bendability) can be expected.

When the aqueous emulsion dispersion of the present invention is used, the aqueous emulsion dispersion is packed into a vessel such as a steel drum or container and transported, then brought to a coating machine or facility for mixing with another emulsion through a pump. In such conditions, the thermoplastic elastomer and water which is the dispersing medium are sometimes separated in the vessel during storage or transportation (water separation from emulsion) and the concentration of the dispersion becomes heterogeneous. Then the coating amount or amount to be added to another emulsion becomes unstable, resulting in the problem that uniform coating thickness and stable modifying effect cannot be obtained. Therefore it is important to improve the emulsifying and dispersing property and also the storage stability. In addition, when the emulsion dispersion is introduced by using a pump, emulsified and dispersed state is destructed by the shearing force of the pump, and the thermoplastic elastomer is separated from water which is the dispersing medium to cause some troubles (pump is clogged, damaged and becomes unusable). In order to prevent such problems, mechanical stability must be increased by improving the emulsification ability.

Now the process for producing the aqueous emulsion dispersion of the present invention is explained. The process comprises preparing a solution by dissolving three different kinds of surfactant of a nonionic surfactant, an anionic surfactant and a cationic surfactant into a solution comprising a thermoplastic elastomer and an organic solvent, then emulsifying by mixing with water, and removing the organic solvent. Also, the process for producing the aqueous

emulsion dispersion of the present invention, which further comprises adding and dissolving a thickener in the produced emulsion dispersion, is explained.

First, an embodiment in which a thermoplastic elastomer is emulsified by using three different kinds of surfactant of a nonionic surfactant, an anionic surfactant and a cationic surfactant is described.

A solution in which 100 parts of a thermoplastic elastomer is dissolved in 100 to 1,000 parts of an organic solvent is prepared (the proportion of two components is different depending on the solubility of elastomer in the organic solvent), and then prescribed amounts of a nonionic surfactant, an anionic surfactant and a cationic surfactant are dissolved therein.

The temperature and time when dissolving the thermoplastic elastomer in the organic solvent are not particularly limited, but a temperature of 30° to 80°C is preferable to dissolve the thermoplastic elastomer uniformly (usually taking 2 to 3 hours). In addition, as the solvent, toluene, xylene and cyclohexane are preferably used.

The temperature of the resulting solution of the thermoplastic elastomer and organic solvent containing the emulsifying agent is adjusted to 30° to 80°C, preferably 40° to 60°C. Then the solution is mixed with 80 to 600 parts, preferably 100 to 400 parts of water adjusted to 30° to 80°C, preferably 40° to 60°C, and subjected to emulsification to prepare an emulsion. The amount of water to be used is determined depending on the desired emulsion properties such as particle size.

When mixing the solution of the thermoplastic elastomer and organic solvent containing the emulsifying agent with water, the solution of the thermoplastic elastomer and organic solvent containing the emulsifying agent may be added to water, but it is preferable to add water to the solution of the thermoplastic elastomer solution and organic solvent containing the emulsifying agent from the viewpoint that the emulsion having a uniform particle size can be obtained.

The mixing and emulsifying method is not particularly limited. For example, depending on the purpose and the specification, the optimal emulsifying and dispersing machine such as Line Mixer made by TOKUSHU KIKA KOGYO CO. LTD. and CAVITRON made by EUROTEC, LTD., capable of conducting continuous emulsification and transporting the emulsified material can be used. As a batch preparation type, Combimix made by TOKUSHU KIKA KOGYO CO., LTD equipped with an anchor, a disperser and a mixer can be used.

The emulsion dispersion containing the organic solvent obtained in this way is subjected to the removal of the organic solvent at 25° to 60°C under a reduced pressure of 720 to 640 mmHg (about 96.0 to 85.3 kPa) (removed to a proportion of usually 0.3 % or lower, preferably 0.2 % or lower, more preferably 0.1 % or lower), and the aqueous emulsion dispersion of the present invention is prepared.

When removing the organic solvent, water and a defoaming agent are added in order to adjust the concentration and nitrogen gas is introduced if necessary.

The temperature of water is preferably the same as that of the emulsion dispersion containing the organic solvent. Examples of the defoaming agent are a silicone defoaming agent and a low molecular weight propylene oxide compound, and the amount to be added is usually about 0.1 to 2 parts based on 100 parts of the thermoplastic elastomer emulsion.

After the organic solvent is removed, separation (separation of water from emulsion) may occur in the emulsion dispersion when the emulsion dispersion is stored for a long time and so a thickener is added according to need. The amount of the thickener to be added is determined from the point of good storage stability and suitable viscosity of the resulting emulsion dispersion which enables easy handling.

In addition, an antiseptic agent may be added if necessary.

The thus obtained aqueous emulsion dispersion of the present invention has improved emulsion dispersion ability and thus improved storage stability and mechanical stability. This is attained by emulsifying the thermoplastic elastomer by using, as the emulsifying component for emulsifying and dispersing the thermoplastic elastomer, preferably a specific nonionic surfactant and another surfactant when needed; a complex of anionic surfactant and cationic surfactant, which comprises a part of anionic surfactant and the cationic surfactant (or a part of cationic surfactant and the anionic surfactant); and the remainder of the anionic surfactant (or remainder of the cationic surfactant) and further, by using a thickener if necessary.

The aqueous emulsion dispersion of the present invention can be used as an emulsion for coated paper, foam rubber, tire cord, coating (for can, plastic, inorganic materials or wood), paint, floor polish, adhesive (aqueous adhesive, polymer cement or mortar adhesive), tackifier, removable label, direct mail, processing of fiber such as carpet, automobile sheet or mat, and water-proofing materials. In addition, the aqueous emulsion dispersion of the present invention can be used by mixing with the emulsions which have been used for these purposes. When used for these purposes, the inherent characteristics or actions of the elastomer, such as improving the strength, adhesion and tackifying properties or imparting flexibility (bendability) can be imparted to materials to be treated.

Since the anionic emulsion dispersion of the present invention contains a nonionic surfactant as an emulsifying agent, agglomeration is less likely to occur as compared with the usual anionic emulsion when mixed with cationic emulsion. However, when mixed with a cationic emulsion, the amount of the cationic aqueous emulsion added is

preferably in such a range that the workability is not deteriorated. Similarly, since the cationic aqueous dispersion of the present invention contains a nonionic surfactant as an emulsifying agent, agglomeration is less likely to occur as compared with the usual cationic emulsion when mixed with an anionic emulsion. However, when mixed with an anionic emulsion, the amount of the anionic aqueous dispersion is preferably in such a range that the workability is not deteriorated.

In addition, an aqueous emulsion dispersion is also useful as an asphalt modifier.

When the aqueous emulsion dispersion of the present invention is used by mixing with emulsions which have previously been used in the aforementioned utilities, the amount of the previously used emulsions (solid) is 1 to 20,000 parts, preferably 10 to 10,000 parts based on 100 parts of the aqueous emulsion dispersion of the present invention (solid). This is because the advantages of the aqueous emulsion dispersion of the present invention can be imparted without preventing the ability of the previously used emulsions. When the aqueous emulsion dispersion of the present invention is used by mixing with the previously used asphalt modifiers, the amount of the previously used asphalt modifier (emulsion) (solid) is 1 to 200 parts, preferably 10 to 100 parts based on 100 parts of the aqueous emulsion dispersion of the present invention (solid) because suitable property can be imparted to asphalt. In addition, when the aqueous emulsion dispersion of the present invention is used by mixing with the previously used emulsion for aqueous pressure-sensitive adhesive, the amount of the previously used emulsion (solid) is 100 to 2,000 parts, preferably 200 to 1,000 parts based on 100 parts of the aqueous emulsion dispersion of the present invention (solid), because the retaining force can be improved without deteriorating the ability of the previously used emulsion.

An example of using the aqueous emulsion dispersion of the present invention as an asphalt modifier is explained in detail below.

Asphalt to which the aqueous emulsion dispersion of the present invention is added, is not particularly limited, but the dispersion is added to asphalt such as petroleum asphalt, natural asphalt, blown asphalt, semiblown asphalt, decolored asphalt (petroleum resin) and guss asphalt.

Examples of the case where asphalt is modified by using the aqueous emulsion dispersion of the present invention include the following cases.

(1) Modification of hot asphalt

The aforementioned aqueous emulsion dispersion is directly added to hot asphalt sufficiently melt to the viscosity at which the asphalt can be stirred, with stirring, water is evaporated, and the stirring is continued until the thermoplastic elastomer is almost uniformly dissolved and dispersed in asphalt.

(2) Modification of hot asphalt mixture

After aggregate and hot asphalt are mixed, the aforementioned aqueous emulsion dispersion is added to the mixture with stirring, water is evaporated, and the stirring is continued until the thermoplastic elastomer is almost uniformly dissolved and dispersed in asphalt. When used in a recycled asphalt mixture, before adding the aqueous emulsion dispersion of the present invention, a recycled material is added (the material is obtained by grinding waste asphalt dug out when repairing pavement and mixing the old asphalt with a fresh asphalt mixture once more for use).

(3) Modification of asphalt emulsion

(a) When the aforementioned aqueous emulsion dispersion is an anionic aqueous emulsion dispersion, an asphalt emulsion obtained by making asphalt into an aqueous emulsion dispersion using an anionic emulsifying agent, a nonionic emulsifying agent, or combination of these, and the aforementioned anionic emulsion dispersion are mixed, and the mixture is stirred until homogeneous.

(a') When the aforementioned aqueous emulsion dispersion is a cationic aqueous emulsion dispersion, an asphalt emulsion obtained by making an asphalt into an aqueous emulsion dispersion using a cationic emulsifying agent, a nonionic emulsifying agent, or combination of these, and the aforementioned cationic aqueous dispersion are mixed, and the mixture is stirred until homogeneous.

(b) The aforementioned aqueous emulsion dispersion is added to hot asphalt, water is evaporated, and stirring was continued until the thermoplastic elastomer is almost uniformly dissolved and dispersed in asphalt. Thereafter, the resultant is mixed with the emulsifying agent and water to obtain an aqueous emulsion dispersion of modified asphalt.

(c) When the aforementioned aqueous emulsion dispersion is an anionic aqueous emulsion dispersion, an anionic emulsifying agent, a nonionic emulsifying agent, or combination of these is added to the aforementioned anionic emulsion dispersion, and hot asphalt is mixed thereto to obtain an aqueous emulsion dispersion.

(c') When the aforementioned aqueous emulsion dispersion is a cationic aqueous emulsion dispersion, a

cationic emulsifying agent, a nonionic emulsifying agent, or a combination of these is added to the aforementioned cationic aqueous dispersion, and a hot asphalt is mixed thereto to obtain an aqueous emulsion dispersion.

(4) Modification of ambient temperature asphalt mixture

A mixture of the asphalt emulsion of the above (3) and the aforementioned aqueous emulsion dispersion, or a modified asphalt emulsion is sprayed on aggregate, or alternatively each of the asphalt emulsion and the aforementioned aqueous emulsion dispersion is sprayed on aggregate separately, followed by stirring until almost homogeneous. When used in a recycled asphalt mixture, a recycling material is further added (in a range in which workability can be attained when an anionic aqueous emulsion dispersion (asphalt modifier) is mixed with a cationic asphalt emulsion, or a cationic aqueous emulsion dispersion (asphalt modifier) is mixed with an anionic asphalt emulsion).

When an asphalt modifier such as the aforementioned aqueous emulsion dispersion is used, the aqueous emulsion dispersion is packed into a vessel such as a steel drum or container and transported, then added to asphalt through a pump. In such conditions, the thermoplastic elastomer and water which is the dispersing medium are sometimes separated in the vessel during storage or transportation (water separation from emulsion) and the concentration of the dispersion becomes heterogeneous. Then the amount to be added of the asphalt modifier becomes unstable, resulting in the problem that uniform modifying effect cannot be obtained and that the separated thermoplastic elastomer in the added asphalt modifier is difficult to dissolve in asphalt. Therefore the storage stability of the thermoplastic elastomer in the asphalt modifier is important. In addition, when the asphalt modifier is introduced by using a pump, emulsified and dispersed state is destructed by the shearing force of the pump, and the thermoplastic elastomer is separated from water which is the dispersing medium, resulting in the problem of faulty dissolution of the thermoplastic elastomer in asphalt, clogging of the pump with the thermoplastic elastomer so that the pump is damaged and becomes unusable. Thus mechanical stability of the asphalt modifier is important.

The aforementioned asphalt modifier is suitably used for modifying asphalt mixture such as hot asphalt mixture, recycled hot asphalt mixture and foamed asphalt mixture, asphalt emulsions for ambient temperature asphalt mixture and recycled ambient temperature asphalt mixture, and asphalts for coating materials such as tack coating, seal coating and armor coating. The aforementioned asphalt modifier can be employed for paving road, making pavement in airport, harbor, railroad, railroad freight yard, railroad station, parking lots, sidewalks, bicycle road, sport facilities, stadium, tennis court, petroleum tank foundations, water supply buildings and waste disposal plant. Further, the aforementioned asphalt modifiers can be used for modifying waterproofing asphalt for engineering works including housetops and roofs, construction asphalt for soundproofing materials for resident floor, floorings and steel tube coatings, and other asphalt such as electric insulating compounds and tunnel heat insulators.

Then, the aqueous emulsion dispersion of the present invention will be explained in more detail based on Examples, but the present invention is not limited thereto.

In addition, the evaluation methods used in Examples are summarized below.

(Foaming)

A 100 ml Nesslerizer tube is charged with 50 ml of a solution obtained by diluting the thermoplastic elastomer aqueous dispersion twice with water. Then inversion stirring is conducted 30 times by hand. The resultant is allowed to stand and then the amount of foam is measured with time.

(Viscosity)

A Brookfield-type rotating viscometer Model BL made by TOKI SANGYO CO., LTD is used.

Single cylindrical rotor is rotated in the sample of 25°C, and the viscosity is obtained from the shearing rate and shearing stress at that time.

(Particle size of thermoplastic elastomer aqueous dispersion)

The particle size of the thermoplastic elastomer aqueous dispersion is found by observing the thermoplastic elastomer aqueous dispersion collected after removing toluene when preparing the emulsion according to the light diffracting method by using SALD2000 made by Shimadzu Corporation.

(Storage stability)

By using Hitachi bench centrifuge (Model CT5DL made by Hitachi Ltd.), the sample (thermoplastic elastomer

aqueous dispersion) was collected (sample: about 45 g) so that the total weight of the sample and vessel tare (27ϕ × 90 mm) became 135 g.

The centrifugation condition was 3,000 rpm (1761g) × 30 minute. After the centrifugation, about 1 g of the thermoplastic elastomer aqueous dispersion was collected from the lower part of the vessel by a straw and weighed with a precision balance. Drying was conducted by evaporating at 200°C for 15 minute using an electric oven followed by weighing. The total solid concentration was obtained from the following equation.

$$\text{Total solid concentration (\%)} = \{ \text{weight after drying by evaporation (g)} \} / \{ \text{amount of collected sample (g)} \} \times 100$$

(Mechanical stability)

50 g of sample was used under the conditions of a load of 10 kg, time of 5 minute, rotation number of 1,000 rpm and temperature of 60°C according to "Maron stability test method" described in JIS 6387, [reference - mechanical stability].

The coagulation ratio was obtained from the following equation. The smaller the value, the better the mechanical stability is.

$$\text{Coagulation ratio (\%)} = \{ \text{weight of dried coagulated material (g)} \} / \{ \text{amount of sample (g)} \times \text{total solid (\%)} / 100 \} \times 100$$

(Initial adhesion)

The inclination-type ball tack test was conducted according to JIS Z 0237. The inclination angle was 30 degrees and the measurement temperature was 25°C. The initial tackiness was evaluated from the number of balls retained on the adhesive part.

(Adhesion)

The 180-degree peeling test was conducted according to JIS Z 0237. A stainless plate (size: 50 mm × 150 mm × 1.5 mm) was used as the test plate (subject), and the measurement temperature was 25°C.

(Retaining force)

The retaining force was measured under an atmosphere of 40°C and 100°C according to JIS Z 0237. The retaining force was evaluated from the falling time when a load of 100 g was applied.

(Adhesion at high temperature)

An adhesive tape having a length of 60 mm and a width of 25 mm was applied over the surface of a glass bar having a diameter of 2 cm, and was cured at room temperature over 24 hours. Then the tape was allowed to stand under an atmosphere of 150°C for 1 hour, and the adhering state of the adhesive tape was observed visually and evaluated by the following criteria.

○: Adhering state remains unchanged compared to the state before allowing to stand.
Δ: Peeling is observed at the end of the adhesive tape.
× : More than half of the adhesive tape is peeled off.

(Chipping resistance)

By using Grabero tester, 500 g of No. 6 crushed stone was jetted at a pressure of 5 $kg/cm^2$ (about 0.49 MPa). The state of the test piece was observed visually and evaluated by the following criteria.

○: No crack is observed

Δ: Ply separation is observed
×: Interfacial separation is observed

(Soundproofing property)

A steel ball having a diameter of 10 mm was dropped on the coated surface of the sample from a height of 1 m. The collision sound produced thereupon was measured 5 times with a sound level meter, and the average value was obtained. The smaller the value, the higher the soundproofing effect is.

(Adhesion)

Using a sample, measurement of adhesion was carried out 3 times by the tape peeling method (2 mm crosscut) according to JIS K 5400, and the average value was obtained. The larger the value, the better the adhesion is.
In the followings, the method of evaluating the aqueous emulsion dispersion of the present invention as an asphalt modifier is explained.

(Physical property of asphalt)

Straight asphalt (60 to 80, available from COSMO Oil Co., Ltd hereinafter Cosmo 60 to 80) was heated to 170°C, and the anionic emulsion dispersion of the present invention was mixed by using a stirrer equipped with 4-wing stirring blade under the condition of a rotation number of 400 to 500 rpm.
The amount of the aqueous emulsion dispersion of the present invention to be incorporated was 6 parts in solid based on 100 parts of the straight asphalt (Cosmo 60 to 80).
The physical property of asphalt was evaluated according to the method described in "Handbook of paving test method" (published by Japanese Road Association, November 10, 1988).

(Physical property of asphalt emulsion residue after evaporation)

To 100 parts of commercially available asphalt emulsion (solid) (PK-4, available from Toho Rika Co., Ltd.) was added 6 parts of the aqueous emulsion dispersion of the present invention (solid). The mixture was stirred for 10 minutes by using a stirrer equipped with a 4-wing stirring blade under the condition of a rotation number of 400 to 500 rpm. Then the mixture was heated to 90 to 95°C with stirring, and most of water was evaporated. Thereafter the temperature was raised to 130 to 140°C to completely evaporate water and the asphalt emulsion evaporation residue was obtained. The physical properties (penetration, softening point, elongation, toughness, tenacity) were assessed.
Evaluation of physical properties of the resulting asphalt emulsion residue after evaporation was conducted according to the method described in "Handbook of paving test method".
Below is a description of raw materials used in Examples including explanation of abbreviations.

<u>Thermoplastic elastomer</u>

SBS: available from JSR Corporation, TR-2631C, molecular weight: about 140,000

<u>Surfactant</u>

Styrenated phenol EOA: obtained by addition-polymerizing 20 moles of ethylene oxide to phenol to which an average of 2 styrene groups are added (monostyrenated phenol polyalkylene oxide adduct: distyrenated phenol polyalkylene oxide adduct: tri or more styrenated phenol polyalkylene oxide adduct = 18 : 48 : 34 (by weight))
Benzylated phenol EOA: obtained by addition-polymerizing 20 moles of ethylene oxide to phenol to which an average of 2 benzyl groups are added (monobenzylated phenol polyalkylene oxide adduct: dibenzylated phenol polyalkylene oxide adduct: tri or more benzylated phenol polyalkylene oxide adduct = 16 : 47 : 37 (by weight))
Lauryl alcohol EOA: obtained by addition-polymerizing 20 moles of ethylene oxide to lauryl alcohol
LDMBAC: lauryldimethylbenzylammonium chloride
LDMEAS: lauryldimethylammonium ethylsulfate
Styrenated phenol EOA sodium sulfate: compound obtained by addition-polymerizing 13 moles of ethylene oxide to phenol to which an average of 2 styrene groups are added (the proportion of mono-: di- : tri- or more is as defined in the case of styrenated phenol EOA), and further sulfating.
Rosin K: potassium salt of natural anionic compound

Thickener

HEC: hydroxyethyl cellulose (MR250HR, available from Herculus Incorporated)

EXAMPLE 1

Emulsifying machine (Combimix TK Model 3M-5 made by TOKUSHU KIKA KOGYO CO., LTD) equipped with a disperser, a mixer and an anchor was charged with 100 parts of SBS (600 g) and 300 parts of toluene (1800 g), and the temperature was raised to 55°C to dissolve SBS.

After dissolving, thereto were added, as the surfactant (on a solid basis), 4.7 parts of styrenated phenol EOA (28.2 g), 3 parts of styrenated phenol EOA sodium sulfate (18.0 g) and 0.3 part of LDMBAC (1.8 g). The mixture was stirred and mixed for 10 minutes under the condition of a peripheral speed of the mixer of 12.8 m/sec, a peripheral speed of the disperser of 9.6 m/sec, and a rotation number of the anchor of 60 rpm.

Then 250 parts (1,500 g) of warm water of 55°C was added over 30 minutes. After addition, stirring was conducted for 10 minutes and the SBS emulsion dispersion was obtained.

Subsequently, toluene was removed at 60°C under 720 to 640 mmHg (about 96.0 to 85.3 kPa) to adjust the remaining amount of toluene to at most 0.05 %, and the anionic aqueous emulsion dispersion in which the amount of solid was adjusted to 50 % was obtained.

Foaming of the obtained SBS anionic aqueous emulsion dispersion was 20 ml immediately after preparation, became 9 ml after 1 minute, and 3 ml after 5 minutes.

The viscosity, particle size, storage stability and mechanical stability of the obtained SBS anionic aqueous emulsion dispersion (the amount of solid: 50 %) were measured. The results are shown in Table 1.

The physical properties of asphalt and physical properties of the asphalt emulsion residue after evaporation when using the obtained dispersion as an asphalt modifier were measured. The results are shown in Table 1.

EXAMPLE 2

SBS anionic aqueous emulsion dispersion was obtained in the same manner as in Example 1 except that LDMEAS was used instead of LDMBAC, and subjected to evaluation. The results are shown in Table 1.

EXAMPLES 3 to 8 and COMPARATIVE EXAMPLES 1 to 5

SBS anionic aqueous emulsion dispersions were prepared in the same manner as in Example 1 using raw materials in the amounts as described in Table 1, and subjected to evaluation. The results are shown in Table 1.

In Examples 6 to 8 and Comparative Examples 3 to 4, HEC, the thickener was added in the form of powder, to the SBS emulsion dispersions (the amount of solid: 55 %) prepared in Examples 1, 2, 4 and Comparative Examples 1 and 2, in an amount of, for instance, 0.2 part (1.2 g) in Example 6; then water was added thereto so that the amount of the solid became 50 %; the mixture was stirred (at 2,000 rpm) and allowed to stand for 12 hours to dissolve HEC. Also in Examples 7, 8 and Comparative Examples 3 and 4, the SBS anionic aqueous emulsion dispersion was prepared by using the thickener in the amount as described in Table 1.

EXAMPLES 9 and 10

80 parts of the SBS anionic aqueous emulsion dispersion containing 50 % of solid, obtained in Example 1 or 6, was mixed with 20 parts of SBR latex (JSR 0678 available from JSR Corporation) having a glass transition temperature of 60°C and Mooney viscosity (ML 1 + 4) of 50 and containing 50 % of solid, obtained by emulsion polymerization using an anionic surfactant. The resultant was subjected to evaluation. The results are shown in Table 1.

EXAMPLE 11

60 parts of the SBS anionic aqueous emulsion dispersion containing 50 % of solid, obtained in Example 1, was mixed with 40 parts of naphthene oil (NM-280, available from Idemitsu Kosan Co., Ltd) which had been emulsified with styrenated phenol EOA. The resultant was subjected to evaluation. The results are shown in Table 1.

TABLE 1

| Ex. No. | 1 | 2 | 3 | 4 | 5 | 6 | 7 | 8 | 9 | 10 | 11 | Com. Ex.1 | Com. Ex.2 | Com. Ex.3 | Com. Ex.4 | Com. Ex.5 |
|---|---|---|---|---|---|---|---|---|---|---|---|---|---|---|---|---|
| Composition (part) | | | | | | | | | | | | | | | | |
| SBS | 100 | 100 | 100 | 100 | 100 | 100 | 100 | 100 | | | | 100 | 100 | 100 | 100 | 100 |
| Styrenated phenol EOA | 4.7 | 4.7 | - | - | 4.7 | 4.7 | 4.7 | - | | | | 5.0 | - | 5.0 | - | - |
| Benzylated phenol EOA | - | - | 4.7 | 4.7 | - | - | - | 4.7 | | | | - | 5.0 | - | 5.0 | - |
| Lauryl alcohol EOA | - | - | - | - | - | - | - | - | | | | - | - | - | - | 5.0 |
| Styrenated phenol EOA sodium sulfate | 3.0 | 3.0 | - | - | - | 3.0 | 3.0 | - | *1 | *2 | *3 | 3.0 | - | 3.0 | - | - |
| Rosin K | - | - | 3.0 | 3.0 | 3.0 | - | - | 3.0 | | | | - | 3.0 | - | 3.0 | 3.0 |
| LDMBAC | 0.3 | - | 0.3 | - | 0.3 | 0.3 | - | - | | | | - | - | - | - | - |
| LDMEAS | - | 0.3 | - | 0.3 | - | - | 0.3 | 0.3 | | | | - | - | - | - | - |
| HEC | - | - | - | - | - | 0.2 | 0.2 | 0.2 | | | | - | - | 0.2 | 0.2 | - |

-continued-

-continued-

| Ex. No. | 1 | 2 | 3 | 4 | 5 | 6 | 7 | 8 | 9 | 10 | 11 | Com. Ex.1 | Com. Ex.2 | Com. Ex.3 | Com. Ex.4 | Com. Ex.5 |
|---|---|---|---|---|---|---|---|---|---|---|---|---|---|---|---|---|
| <u>Result of evaluation</u> | | | | | | | | | | | | | | | | |
| Foaming (ml) Immediately after | 20.0 | 21.0 | 20.0 | 19.0 | 18.0 | 19.0 | 22.0 | 20.0 | 20.0 | 21.0 | 18.0 | 27.0 | 25.0 | 28.0 | 26.0 | 50 ≤ |
| 1 minute after | 9.0 | 11.0 | 11.0 | 12.0 | 8.0 | 10.0 | 12.0 | 10.0 | 11.0 | 12.0 | 7.0 | 16.0 | 15.0 | 17.0 | 17.0 | 50 ≤ |
| 5 minute after | 3.0 | 4.0 | 4.0 | 3.0 | 3.0 | 4.0 | 3.0 | 4.0 | 3.0 | 4.0 | 3.0 | 8.0 | 8.0 | 10.0 | 10.0 | 48 |
| Viscosity (mPa·s) | 220 | 200 | 230 | 220 | 200 | 1100 | 1050 | 1200 | 240 | 1100 | 300 | 240 | 260 | 1000 | 1100 | 220 |
| Particle size (μm) | 1.1 | 1.2 | 1.0 | 1.2 | 1.2 | 1.1 | 1.2 | 1.2 | 1.4 | 1.4 | 1.1 | 1.9 | 2.1 | 1.9 | 2.1 | 3.0 |
| Storage stability | | | | | | | | | | | | | | | | |
| Total solid content before centrifugation (%) | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 |
| Total solid content after centrifugation (%) | 49.0 | 48.8 | 48.9 | 48.6 | 49.1 | 49.0 | 49.4 | 49.5 | 48.9 | 49.1 | 49.2 | 42.8 | 43.1 | 44.1 | 44.0 | 36.3 |
| Mechanical stability | | | | | | | | | | | | | | | | |
| Coagulation ratio (%) | 0.01 | 0.01 | 0.01 | 0.01 | 0.00 | 0.01 | 0.01 | 0.01 | 0.01 | 0.01 | 0.01 | 0.88 | 0.91 | 0.78 | 0.90 | 4.57 |

-continued-

-continued-

| Ex. No. | 1 | 2 | 3 | 4 | 5 | 6 | 7 | 8 | 9 | 10 | 11 | Com. Ex.1 | Com. Ex.2 | Com. Ex.3 | Com. Ex.4 | Com. Ex.5 |
|---|---|---|---|---|---|---|---|---|---|---|---|---|---|---|---|---|
| Result of evaluation | | | | | | | | | | | | | | | | |
| Property of asphalt | | | | | | | | | | | | | | | | |
| Immediately after preparation | | | | | | | | | | | | | | | | |
| 60°C viscosity (× $10^4$ Pa·s) | 9.1 | 9.0 | 8.9 | 9.2 | 9.4 | 8.8 | 9.0 | 9.2 | 8.3 | 8.0 | 5.0 | - | - | - | - | - |
| Softening point (°C) | 82.5 | 83.0 | 82.5 | 83.5 | 83.5 | 82.0 | 83.0 | 83.0 | 81.0 | 80.5 | 75.0 | - | - | - | - | - |
| After 1 month | | | | | | | | | | | | | | | | |
| 60°C viscosity (× $10^4$ Pa·s) | 9.2 | 9.1 | 8.9 | 9.4 | 9.4 | 8.9 | 9.0 | 9.4 | 8.5 | 8.2 | 5.3 | - | - | - | - | - |
| Softening point (°C) | 83.0 | 83.0 | 83.5 | 84.0 | 83.5 | 83.0 | 83.0 | 84.0 | 82.5 | 81.5 | 76.5 | - | - | - | - | - |
| Property of asphalt emulsion residue after evaporation | | | | | | | | | | | | | | | | |
| Penetration (1/10 mm) | 94 | 95 | 95 | 93 | 91 | 93 | 92 | 95 | 96 | 95 | 100 | - | - | - | - | - |
| Softening point (°C) | 81.0 | 81.5 | 80.5 | 81.0 | 81.5 | 81.5 | 80.0 | 81.0 | 80.0 | 80.0 | 73.5 | - | - | - | - | - |
| Elongation (5°C, cm) | 81 | 82 | 82 | 81 | 83 | 82 | 81 | 83 | 90 | 92 | 98 | - | - | - | - | - |
| Toughness (25°C, N·m) | 25.1 | 24.5 | 25.2 | 24.8 | 24.6 | 24.8 | 25.0 | 24.8 | 24.7 | 24.1 | 22.1 | - | - | - | - | - |
| Tenacity (25°C, N·m) | 20.2 | 19.8 | 20.6 | 20.4 | 19.6 | 20.4 | 20.6 | 19.6 | 19.5 | 19.1 | 18.0 | - | - | - | - | - |

*1: Mixture of 80 parts of SBS anionic aqueous emulsion dispersion obtained in Ex. 1 and 20 parts of SBR latex (JSR0678).

*2: Mixture of 80 parts of SBS anionic aqueous emulsion dispersion obtained in Ex. 6 and 20 parts of SBR latex (JSR0678).

*3: Mixture of 60 parts of SBS anionic aqueous emulsion dispersion obtained in Ex. 1 and naphthen oil emulsion.

The coagulation ratio in the Maron stability test of the anionic aqueous emulsion dispersion of the present invention is 1/10 or smaller than that of the emulsion dispersion described in JP-A-2001-59053, in which a nonionic surfactant and an anionic surfactant are used together. Also, from the increase of the storage stability of a few %, it can be seen that the emulsifying property is significantly improved.
When mixed with SBR latex, the effect that elongation becomes better and crack resistance is improved can be expected.
In addition, when mixed with naphthene oil, flexibility (bendability) becomes better and there is a significant effect on the recycling of deteriorated asphalt.
When used, for example, as an asphalt modifier, the anionic aqueous emulsion dispersion of the present invention mixes and dissolves into asphalt easily, and can improve the softening point, viscoelasticity, toughness and high temperature viscosity of asphalt. Therefore the flow resistance, abrasion resistance and toughness of pavement is improved and the life of pavement can be extended. In addition, since the modification of asphalt emulsion, which has been difficult in the case of the previous solid thermoplastic elastomer becomes easy, the anionic aqueous emulsion dispersion of the present invention is also effective for modifying mixture for ambient temperature pavement and coating material. Further, since the low temperature flexibility of hot asphalt can be improved, the anionic aqueous emulsion dispersion of the present invention is also useful for modifying waterproofing materials.

EXAMPLES 12 to 15 and COMPARATIVE EXAMPLES 6 to 8

Each of the SBS anionic aqueous emulsion dispersions obtained in Example 1 and Example 11 was mixed into deteriorated asphalt in the amount as shown in Table 2, and the recycling effect was evaluated. The results are shown in Table 2.
The deteriorated asphalt was obtained by forming a 1 mm thick thin film using Cosmo 60 to 80 and oxidative-deteriorating the film at 85°C for 48 hours by using a hot air drier.

TABLE 2

| Ex. No. | 12 | 13 | 14 | 15 | Com. Ex. 6 | Com. Ex. 7 | Com. Ex. 8 |
|---|---|---|---|---|---|---|---|
| Composition (part) | | | | | | | |
| Deteriorated asphalt *4 | 30 | 50 | 77 | 50 | 50 | 83 | 100 |
| Fresh asphalt *5 | 57 | 34 | - | 40 | 40 | - | - |
| Softening Agent *6 | 7 | 10 | 17 | - | 10 | 17 | - |
| SBS anionic aqueous emulsion dispersion obtained in Ex. 1 (solid) | 6 | 6 | 6 | - | - | - | - |
| Mixture of SBS anionic aqueous emulsion dispersion obtained in Ex. 11 and naphthene oil emulsion (solid) | - | - | - | 10 | - | - | - |
| Result of evaluation | | | | | | | |
| Property of asphalt | | | | | | | |
| Penetration (1/10 mm) | 48 | 47 | 45 | 45 | 64 | 61 | 20 |
| Softening point (°C) | 80.5 | 81.0 | 82.0 | 81.5 | 52.5 | 53.5 | 62.5 |
| Elongation (5°C, cm) | 70 | 64 | 61 | 61 | 10 | 3 | 0 |
| Toughness (25°C, N·m) | 26.3 | 27.0 | 28.0 | 27.5 | 6.6 | 6.9 | 12.9 |
| Tenacity (25°C, N·m) | 18.9 | 18.3 | 17.9 | 18.0 | 1.2 | 1.1 | 0.8 |

*4: Asphalt obtained by oxidative-deterioration of Cosmo 60-80.

*5: Fresh asphalt (Cosmo 60-80).

*6: Naphthene oil (NM-280, available from Idemitsu Kosan Co., Ltd.) was used.

When the SBS anionic aqueous emulsion dispersion of the present invention is mixed to deteriorated asphalt, the softening point, elongation, toughness and tenacity are significantly improved, and there is a satisfactory effect of recycling and modifying deteriorated asphalt.

## EXAMPLES 16 to 18 and COMPARATIVE EXAMPLE 9

Acrylic emulsion AE 200 (available from JSR Corporation) obtained by emulsion polymerization with an anionic surfactant, containing 51 % of solid and having a glass transition temperature of 45°C, was mixed with the SBS anionic aqueous emulsion dispersion obtained in Example 2 in the proportion as shown in Table 3. To 100 parts of the resulting mixture (solid) was added 0.1 part of 25 % aqueous ammonia and the pH was adjusted to pH 8. Then 0.1 part of a polycarboxylic acid emulsion thickener (Primal ASE-60 available from Japan Acrylic Chemical Co. Ltd.) was added thereto, and an aqueous pressure-sensitive adhesive having a viscosity of about 10,000 mPa·sec (BM type) was prepared.

The obtained aqueous pressure-sensitive adhesive was coated on the surface of a substrate comprising a polyester film (thickness: 25 μm) using an applicator having a slit of 15/10,000 inch. The coated film was dried at 110°C for 1 minute, and an adhesive tape having an adhesive layer (20 to 25 g/$m^2$) on the surface of the substrate was prepared.

Evaluation was carried out according to the evaluation items listed in Table 3 using the obtained tape. The results are shown in Table 3.

TABLE 3

| Ex. No. | 16 | 17 | 18 | Com. Ex. 9 |
|---|---|---|---|---|
| Mixing ratio (part) | | | | |
| SBS anionic aqueous emulsion dispersion obtained in Ex. 2 (solid) | 10 | 20 | 30 | 0 |
| Acrylic emulsion AE200 (solid) | 90 | 80 | 70 | 100 |
| Result of evaluation | | | | |
| Initial adhesion (Ball No) | 12 | 12 | 11 | 10 |
| Adhesion strength (N/25 mm) | 0.83 | 0.82 | 0.78 | 0.83 |
| Retaining force (40°C) (Hr) | > 48 | > 48 | > 48 | 16 |
| Retaining force (100°C) (Hr) | > 12 | > 12 | > 12 | 6 |
| Adhesion at high temperature (visual observation) | ○ | ○ | ○ | △ |

The SBS anionic aqueous emulsion dispersion of the present invention can be suitably used as a modifier for aqueous pressure-sensitive adhesive.

The aqueous pressure-sensitive adhesive using the SBS anionic aqueous emulsion dispersion of the present invention has good adhesion to the object to be adhered and in addition, moderate adhesion and excellent heat resistance in high temperature conditions.

EXAMPLES 19 to 20 and COMPARATIVE EXAMPLE 10

To 100 parts of the SBS anionic aqueous emulsion dispersion obtained in Example 3 or 4 (solid) or to 100 parts of SBR latex JSR 0545 (available from JSR Corporation) (solid) containing 54 % of solid and having a glass transition temperature of 30°C, obtained by emulsion polymerization with an anionic surfactant, were added 0.2 part of a dispersing agent (Aron A-20 available from Aron Kasei Co., Ltd.), 150 parts of calcium carbonate and 50 parts of talc. Then water was added thereto to adjust the total solid to 70 %, and 0.2 part of a polyether polyurethane thickener (DK thickener SCT-275 available from DAI-ICHI KOUGYO SEIYAKU CO., LTD) was added to adjust the viscosity to 30,000 mPa·sec to prepare a coating.

The obtained coating was coated on a steel plate having a thickness of 0.8 mm by an airless spray so that the thickness of the coating became 1.6 mm. The coating was dried at 90°C for 10 minutes and then at room temperature for 1 day.

Evaluation was carried out according to the evaluation items listed in Table 4 using the obtained sample. The results are shown in Table 4.

TABLE 4

| Ex. No. | 19 | 20 | Com. Ex. 10 |
|---|---|---|---|
| Type (part) | | | |
| SBS anionic aqueous emulsion dispersion obtained in Ex. 3 | 100 | 0 | 0 |
| SBS anionic aqueous emulsion dispersion obtained in Ex. 4 | 0 | 100 | 0 |
| SBR latex JSR0545 | 0 | 0 | 100 |
| Result of evaluation | | | |
| Chipping resistance | ○ | ○ | △ |
| Soundproofing property (dB (A)) | 83 | 80 | 95 |
| Adhesion (10 point method) | 10 | 10 | 6 |

The coating obtained by using the SBS anionic aqueous emulsion dispersion of the present invention is excellent in chipping resistance, soundproofing property and adhesion, and thus useful for aqueous chipping-resistant coating.

EXAMPLES 21 to 23 and COMPARATIVE EXAMPLE 11

To 100 parts of Cosmo 60 - 80 (available from COSMO Oil Co., Ltd) was added 10 parts on a solid basis of a mixture of the SBS anionic aqueous emulsion dispersion obtained in Example 3 or Example 4, and SBR latex JSR

Rodex (available from JSR Corporation) containing 50 % of solid and having a glass transition temperature of 50°C and Mooney viscosity (ML 1 + 4) of 50, obtained by emulsion polymerization with an anionic surfactant, in the amount shown in Table 5 (on a solid basis). The resulting mixture was mixed until homogeneous to obtain waterproofing asphalt.

The strength and the elongation of the obtained waterproofing asphalt were measured using Autograph AG-500A made by Shimadzu Corporation according to JIS A6021.

For comparison, commercially available waterproofing asphalt, blown asphalt (available from COSMO Oil Co., Ltd), was evaluated. The results are shown in Table 5.

TABLE 5

| Ex. No. | 21 | 22 | 23 | Com. Ex. 11 |
|---|---|---|---|---|
| Mixing ratio (part) | | | | |
| Kind and amount (solid) of SBS anionic aqueous emulsion dispersion | Ex. 3 100 | Ex. 4 100 | Ex. 3 70 | *7 |
| SBR latex JSR rodex (solid) | 0 | 0 | 30 | |
| Result of evaluation | | | | |
| Strength (N/mm$^2$) Temperature (°C) | | | | |
| 5 | 24 | 25 | 17 | 25 |
| 20 | 6 | 7 | 9 | 8 |
| 30 | 4 | 5 | 3 | 2 |
| Elongation (%) Temperature (°C) | | | | |
| 5 | 300 | 300 | 400 | 2 |
| 20 | 500 | 500 | 600 | 30 |
| 30 | 600 | 500 | 700 | 70 |

*7: Blown asphalt (available from Cosmo Oil Co., Ltd.) was used.

It is found that when used as a modifier for waterproofing asphalt, the SBS anionic aqueous emulsion dispersion of the present invention provides a suitable property, i.e., excellent balance in the strength and elongation.

EXAMPLE 24

Emulsifying machine (TK Combimix model 3M-5 made by TOKUSHU KIKA KOGYO CO., LTD) equipped with a disperser, a mixer and an anchor was charged with 100 parts of SBS (600 g) and 300 parts of toluene (1,800 g), and the temperature was raised to 55°C to dissolve the SBS.

After dissolving, thereto were added, as the surfactant (on a solid basis), 4.5 parts of styrenated phenol EOA (27 g), 5 parts of LDMBAC (30 g) and 0.5 part of styrenated phenol EOA sodium sulfate (3 g). The mixture was stirred and mixed for 10 minutes under the condition of a peripheral speed of the mixer of 12.8 m/sec, a peripheral speed of the disperser of 9.6 m/ sec and a rotation number of the anchor of 60rpm.

Then 250 parts of warm water (1,500 g) of 55°C was added over 30 minutes. After addition, stirring was conducted for 10 minutes and the SBS emulsion dispersion was obtained.

Thereafter toluene was removed at 60°C under 720 to 640 mmHg (about 96.0 to 85.3 kPa) to adjust the remaining amount of toluene to at most 0.05 %, and the cationic aqueous emulsion dispersion in which the amount of solid was adjusted to 50 % was obtained.

Foaming of the obtained SBS cationic aqueous emulsion dispersion was 19 ml immediately after the preparation, became 10 ml after 1 minutes, and 4 ml after 5 minutes.

The viscosity, particle size, storage stability and mechanical stability of the obtained SBS cationic aqueous emulsion dispersion (the amount of solid: 50 %) were measured. The results are shown in Table 6.

In addition, The physical properties of asphalt and physical properties of the asphalt emulsion residue after evaporation when using the obtained dispersion as an asphalt modifier were measured. The results are shown in Table 6.

EXAMPLE 25

SBS cationic aqueous emulsion dispersion was obtained in the same manner as in Example 24 except that rosin K was used instead of styrenated phenol EOA, and subjected to evaluation. The results are shown in Table 6.

EXAMPLES 26 to 31 and COMPARATIVE EXAMPLE 12 to 16

SBS cationic aqueous emulsion dispersions were prepared in the same manner as in Example 24 using raw materials in the amounts as described in Table 6, and subjected to evaluation. The results are shown in Table 6.

In Examples 29 to 31 and Comparative Examples 14 to 15, HEC, the thickener was added in the form of powder, to the SBS emulsion dispersions (the amount of solid: 55 %) prepared in Examples 24 to 25, 27 and Comparative Examples 12 and 13, in an amount of, for instance, 0.3 part (1.8 g) in Example 29; then water was added thereto so that the amount of the solid became 50 %; the mixture was stirred (at 2,000 rpm) and allowed to stand for 12 hours to dissolve HEC. Also in Examples 30, 31 and Comparative Examples 14 and 15, the SBS cationic aqueous emulsion dispersion was prepared by using the thickener in the amount as described in Table 6.

EXAMPLES 32 and 33

80 parts of the SBS cationic aqueous emulsion dispersion containing 50 % of solid, obtained in Example 24 or 29, was mixed with 20 parts of SBR latex (Rodex K available from JSR Corporation) having a glass transition temperature of 50°C and Mooney viscosity (ML 1 + 4) of 50 and containing 50 % of solid, obtained by emulsion polymerization using a cationic surfactant. The resultant was subjected to evaluation. The results are shown in Table 6.

EXAMPLE 34

60 parts of the SBS cationic aqueous emulsion dispersion containing 50 % of solid obtained in Example 24 was mixed with 40 parts of naphthene oil (NM-280 available from Idemitsu Kosan Co., Ltd) containing 50 % of solid, emulsified with styrenated phenol EOA. The resultant was subjected to evaluation. The results are shown in Table 6.

TABLE 6

| Ex. No. | 24 | 25 | 26 | 27 | 28 | 29 | 30 | 31 | 32 | 33 | 34 | Com. Ex.12 | Com. Ex.13 | Com. Ex.14 | Com. Ex.15 | Com. Ex.16 |
|---|---|---|---|---|---|---|---|---|---|---|---|---|---|---|---|---|
| Composition (part) | | | | | | | | | | | | | | | | |
| SBS | 100 | 100 | 100 | 100 | 100 | 100 | 100 | 100 | | | | 100 | 100 | 100 | 100 | 100 |
| Styrenated phenol EOA | 4.5 | 4.5 | - | - | 4.5 | 4.5 | 4.5 | - | | | | 5.0 | - | 5.0 | - | - |
| Benzylated phenol EOA | - | - | 4.5 | 4.5 | - | - | - | 4.5 | | | | - | 5.0 | - | 5.0 | - |
| Lauryl alcohol EOA | - | - | - | - | - | - | - | - | | | | - | - | - | - | 5.0 |
| LDMBAC | 5.0 | 5.0 | - | - | - | 5.0 | 5.0 | - | *1 | *2 | *3 | 5.0 | - | 5.0 | - | - |
| LDMEAS | - | - | 5.0 | 5.0 | 5.0 | - | - | 5.0 | | | | - | 5.0 | - | 5.0 | 5.0 |
| Styrenated phenol EOA sodium sulfate | 0.5 | - | 0.5 | - | 0.5 | 0.5 | - | - | | | | - | - | - | - | - |
| Rosin K | - | 0.5 | - | 0.5 | - | - | 0.5 | 0.5 | | | | - | - | - | - | - |
| HEC | - | - | - | - | - | 0.3 | 0.3 | 0.3 | | | | - | - | 0.3 | 0.3 | - |

-continued-

-continued-

| Ex. No. | 24 | 25 | 26 | 27 | 28 | 29 | 30 | 31 | 32 | 33 | 34 | Com. Ex.12 | Com. Ex.13 | Com. Ex.14 | Com. Ex.15 | Com. Ex.16 |
|---|---|---|---|---|---|---|---|---|---|---|---|---|---|---|---|---|
| Result of evaluation | | | | | | | | | | | | | | | | |
| Foaming (ml) Immediately after | 19.0 | 15.0 | 20.0 | 16.0 | 18.0 | 22.0 | 21.0 | 22.0 | 20.0 | 21.0 | 17.0 | 23.0 | 25.0 | 23.0 | 24.0 | 50 ≤ |
| 1 minute after | 10.0 | 8.0 | 11.0 | 9.0 | 10.0 | 15.0 | 13.0 | 10.0 | 10.0 | 14.0 | 7.0 | 15.0 | 18.0 | 15.0 | 17.0 | 50 ≤ |
| 5 minute after | 4.0 | 2.0 | 5.0 | 3.0 | 3.0 | 5.0 | 2.0 | 2.0 | 5.0 | 5.0 | 3.0 | 5.0 | 8.0 | 7.0 | 6.0 | 47 |
| Viscosity (mPa·s) | 320 | 350 | 250 | 280 | 300 | 2100 | 2200 | 2000 | 310 | 1900 | 380 | 250 | 270 | 2000 | 1800 | 230 |
| Particle size (μm) | 1.2 | 1.3 | 1.3 | 1.2 | 1.2 | 1.2 | 1.3 | 1.2 | 1.4 | 1.4 | 2 | 1.8 | 1.7 | 1.8 | 1.7 | 3.1 |
| Storage stability | | | | | | | | | | | | | | | | |
| Total solid content before centrifugation (%) | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 | 50.0 |
| Total solid content after centrifugation (%) | 48.6 | 48.8 | 48.9 | 48.3 | 48.2 | 49.5 | 49.8 | 49.2 | 48.7 | 49.6 | 49.5 | 43.4 | 42.3 | 42.1 | 44.2 | 37.3 |
| Mechanical stability | | | | | | | | | | | | | | | | |
| Coagulation ratio (%) | 0.01 | 0.00 | 0.01 | 0.01 | 0.02 | 0.01 | 0.02 | 0.01 | 0.01 | 0.01 | 0.01 | 0.57 | 0.65 | 0.82 | 0.88 | 4.37 |

-continued-

-continued-

| Ex. No. | 24 | 25 | 26 | 27 | 28 | 29 | 30 | 31 | 32 | 33 | 34 | Com. Ex.12 | Com. Ex.13 | Com. Ex.14 | Com. Ex.15 | Com. Ex.16 |
|---|---|---|---|---|---|---|---|---|---|---|---|---|---|---|---|---|
| Result of evaluation | | | | | | | | | | | | | | | | |
| Property of asphalt | | | | | | | | | | | | | | | | |
| Immediately after preparation | | | | | | | | | | | | | | | | |
| 60°C viscosity (× $10^4$ Pa·s) | 8.8 | 9.4 | 8.7 | 8.9 | 9.3 | 8.6 | 8.7 | 9.0 | 8.0 | 7.8 | 5.3 | - | - | - | - | - |
| Softening point (°C) | 82.0 | 83.5 | 82.0 | 82.5 | 83.0 | 81.5 | 82.5 | 83.0 | 80.0 | 80.0 | 75.5 | - | - | - | - | - |
| After 1 month | | | | | | | | | | | | | | | | |
| 60°C viscosity (× $10^4$ Pa·s) | 9.0 | 9.5 | 8.9 | 9.1 | 9.3 | 8.7 | 8.8 | 9.0 | 8.1 | 7.9 | 5.4 | - | - | - | - | - |
| Softening point (°C) | 82.5 | 84.0 | 83.0 | 83.5 | 83.5 | 82.0 | 83.0 | 83.5 | 81.5 | 80.5 | 76.0 | - | - | - | - | - |
| Property of asphalt emulsion residue after evaporation | | | | | | | | | | | | | | | | |
| Penetration (1/10 mm) | 95 | 93 | 91 | 92 | 93 | 90 | 92 | 93 | 98 | 93 | 102 | - | - | - | - | - |
| Softening point (°C) | 81.0 | 81.5 | 80.5 | 81.0 | 81.0 | 80.5 | 81.5 | 81.5 | 80.0 | 80.0 | 74.0 | - | - | - | - | - |
| Elongation (5°C, cm) | 80 | 78 | 79 | 78 | 79 | 83 | 82 | 83 | 88 | 90 | 98 | - | - | - | - | - |
| Toughness (25°C, N·m) | 24.6 | 25.0 | 23.8 | 24.2 | 25.1 | 22.3 | 23.1 | 24.1 | 22.1 | 20.8 | 22.9 | - | - | - | - | - |
| Tenacity (25°C, N·m) | 19.8 | 20.8 | 19.1 | 19.6 | 20.3 | 18.8 | 19.2 | 19.5 | 16.5 | 15.2 | 18.1 | - | - | - | - | - |

*1: Mixture of 80 parts of SBS cationic aqueous emulsion dispersion obtained in Ex. 24 and 20 parts of SBR cationic latex.

*2: Mixture of 80 parts of SBS cationic aqueous emulsion dispersion obtained in Ex. 29 and 20 parts of SBR cationic latex.

*3: Mixture of 60 parts of SBS cationic aqueous emulsion dispersion obtained in Ex. 24 and 40 parts of naphthen oil emulsion.

The coagulation ratio in the Maron stability test of the cationic aqueous emulsion dispersion of the present invention is 1/10 or smaller than that of the emulsion dispersion described in JP-A-2001-98159, in which a nonionic surfactant and a cationic surfactant are used together. Also, from the increase of the storage stability of a few %, it can be seen that the emulsifying property is significantly improved.

When mixed with SBR latex, the effect that elongation becomes better and crack resistance is improved can be expected.

In addition, when mixed with naphthene oil, flexibility (bendability) becomes better and there is a significant effect on the recycling of deteriorated asphalt.

When used, for example, as an asphalt modifier, the cationic aqueous emulsion dispersion of the present invention mixes and dissolves into asphalt easily, and can improve the softening point, viscoelasticity, toughness and high temperature viscosity of asphalt. Therefore the flow resistance, abrasion resistance and toughness of pavement is improved and the life of pavement can be extended. In addition, since the modification of asphalt emulsion, which has been difficult in the case of the previous solid thermoplastic elastomer becomes easy, the cationic aqueous emulsion dispersion of the present invention is also effective for modifying mixture for ambient temperature pavement and coating material. Further, since the low temperature flexibility of hot asphalt can be improved, the cationic aqueous emulsion dispersion of the present invention is also useful for modifying waterproofing materials.

EXAMPLES 35 to 38 and COMPARATIVE EXAMPLES 17 to 19

Each of the SBS cationic aqueous emulsion dispersions obtained in Example 24 and Example 34 was mixed into deteriorated asphalt in the amount as shown in Table 7, and the recycling effect was evaluated. The results are shown in Table 7.

The deteriorated asphalt was obtained by forming a 1 mm thick thin film using Cosmo 60 to 80 and oxidative-deteriorating the film at 85°C for 48 hours by using a hot air drier.

TABLE 7

| Ex. No. | 35 | 36 | 37 | 38 | Com. Ex. 17 | Com. Ex. 18 | Com. Ex. 19 |
|---|---|---|---|---|---|---|---|
| Composition (part) | | | | | | | |
| Deteriorated asphalt *4 | 30 | 50 | 77 | 50 | 50 | 83 | 100 |
| Fresh asphalt *5 | 57 | 34 | - | 40 | 40 | - | - |
| Softening Agent *6 | 7 | 10 | 17 | - | 10 | 17 | - |
| SBS cationic aqueous emulsion dispersion obtained in Ex. 24 (solid) | 6 | 6 | 6 | - | - | - | - |
| Mixture of SBS cationic aqueous emulsion dispersion obtained in Ex. 34 and naphthene oil emulsion (solid) | - | - | - | 10 | - | - | - |
| Result of evaluation | | | | | | | |
| Property of asphalt | | | | | | | |
| Penetration (1/10 mm) | 47 | 45 | 44 | 44 | 64 | 61 | 20 |
| Softening point (°C) | 81.5 | 82.0 | 82.5 | 81.5 | 52.5 | 53.5 | 62.5 |
| Elongation (5°C, cm) | 72 | 65 | 62 | 61 | 10 | 3 | 0 |
| Toughness (25°C, N·m) | 26.8 | 27.4 | 28.7 | 28.5 | 6.6 | 6.9 | 12.9 |
| Tenacity (25°C, N·m) | 19.1 | 18.8 | 18.5 | 18.3 | 1.2 | 1.1 | 0.8 |

*4: Asphalt obtained by oxidative-deterioration of Cosmo 60-80.

*5: Fresh asphalt (Cosmo 60-80).

*6: Naphthene oil (NM-280, available from Idemitsu Kosan Co., Ltd.) was used.

When the SBS cationic aqueous emulsion dispersion of the present invention is mixed to deteriorated asphalt, the softening point, elongation, toughness and tenacity are significantly improved, and there is a satisfactory effect of recycling and modifying deteriorated asphalt.

EXAMPLES 39 to 41 and COMPARATIVE EXAMPLE 20

Acrylic emulsion AE 311 (available from JSR Corporation) obtained by emulsion polymerization with an anionic surfactant, containing 58 % of solid and having a glass transition temperature of 50°C, was mixed with the SBS cationic aqueous emulsion dispersion obtained in Example 25 in the proportion as shown in Table 8. To 100 parts of the resulting mixture (solid) was added 0.2 part of DK Thickener SCT-275 (available from DAI-ICHI KOUGYO SEIYAKU CO., LTD) which is polyether polyurethane thickener, and an aqueous pressure-sensitive adhesive having a viscosity of about 10,000 mPa·sec (BM type) was prepared.

The obtained aqueous pressure-sensitive adhesive was coated on the surface of a substrate comprising a polyester film (thickness: 25 μm) using an applicator having a slit of 15/ 10,000 inch. The coated film was dried at 110°C for 1 minute, and an adhesive tape having an adhesive layer (20 to 25 g/$m^2$) on the surface of the substrate was prepared.

Evaluation was carried out according to the evaluation items listed in Table 8 using the obtained tape. The results are shown in Table 8.

TABLE 8

| Ex. No. | 39 | 40 | 41 | Com. Ex. 20 |
|---|---|---|---|---|
| Mixing ratio (part) | | | | |
| SBS cationic aqueous emulsion dispersion obtained in Ex. 25 (solid) | 10 | 20 | 30 | 0 |
| Acrylic emulsion AE311 (solid) | 90 | 80 | 70 | 100 |
| Result of evaluation | | | | |
| Initial adhesion (Ball No) | 12 | 12 | 11 | 10 |
| Adhesion strength (N/25 mm) | 0.85 | 0.81 | 0.76 | 0.85 |
| Retaining force (40°C) (Hr) | > 48 | > 48 | > 48 | 17 |
| Retaining force (100°C) (Hr) | > 12 | > 12 | > 12 | 7 |
| Adhesion at high temperature (visual observation) | ○ | ○ | ○ | △ |

The SBS cationic aqueous emulsion dispersion of the present invention can be suitably used as a modifier

for aqueous pressure-sensitive adhesive.

The aqueous pressure-sensitive adhesive using the SBS cationic aqueous emulsion dispersion of the present invention has good adhesion to the object to be adhered and in addition, moderate adhesion and excellent heat resistance in high temperature conditions.

In the present Example, though anionic acrylic emulsion and SBS cationic aqueous emulsion dispersion were mixed, there was no problem in preparation within the mixing ratio described in Table 8.

EXAMPLES 42 to 43 and COMPARATIVE EXAMPLE 21

To 100 parts of the SBS cationic aqueous emulsion dispersion obtained in Example 26 or 27 (solid) was added 0.5 part of a dispersing agent (Sharol DC-902P available from DAI-ICHI KOUGYO SEIYAKU CO., LTD), 150 parts of calcium carbonate and 50 parts of talc. Then water was added thereto to adjust the total solid to 70 %, and a thickener (DK thickener SCT-275) was added to adjust the viscosity to 30,000 mPa·sec to prepare a coating.

For comparison, a coating was prepared in the same manner as described above except that 0.2 part (solid) of a dispersing agent (Aron A-20 available from Aron Kasei Co., Ltd.) was added to 100 parts of SBR latex (JSR 0545 available from JSR Corporation) (solid) containing 54 % of solid and having a glass transition temperature of 30°C, obtained by emulsion polymerization with an anionic surfactant.

The obtained coating was coated on a steel plate having a thickness of 0.8 mm by an airless spray so that the thickness of the coating became 1.6 mm. The coating was dried at 90°C for 10 minutes and then at room temperature for 1 day.

Evaluation was carried out according to the evaluation items listed in Table 9 using the obtained sample. The results are shown in Table 9.

TABLE 9

| Ex. No. | 42 | 43 | Com. Ex. 21 |
|---|---|---|---|
| Type (part) | | | |
| SBS cationic aqueous emulsion dispersion obtained in Ex. 26 | 100 | 0 | 0 |
| SBS cationic aqueous emulsion dispersion obtained in Ex. 27 | 0 | 100 | 0 |
| SBR latex JSR0545 (solid) | 0 | 0 | 100 |
| Result of evaluation | | | |
| Chipping resistance | ○ | ○ | △ |
| Soundproofing property (dB (A)) | 85 | 80 | 95 |
| Adhesion (10 point method) | 10 | 10 | 6 |

The coating obtained by using the SBS cationic aqueous emulsion dispersion of the present invention is excellent in chipping resistance, soundproofing property and adhesion, and thus useful for aqueous chipping-resistant coating.

EXAMPLES 44 to 46 and COMPARATIVE EXAMPLE 22

To 100 parts of Cosmo 60- 80 (available from COSMO Oil Co., Ltd) was added 10 parts on a solid basis of a mixture of the SBS cationic aqueous emulsion dispersion obtained in Example 26 or Example 27 and commercially available SBR latex (Rodex K available from JSR Corporation) in the amount shown in Table 10 on a solid basis. The resulting mixture was mixed until homogeneous to obtain waterproofing asphalt.
The strength and the elongation of the obtained waterproofing asphalt were measured using Autograph AG-500A made by Shimadzu Corporation according to JIS A6021.
For comparison, commercially available waterproofing asphalt, blown asphalt (available from COSMO Oil Co., Ltd) was evaluated. The results are shown in Table 10.

TABLE 10

| Ex. No. | 44 | 45 | 46 | Com. Ex. 22 |
|---|---|---|---|---|
| Mixing ratio (part) | | | | |
| Kind and amount (solid) of SBS cationic aqueous emulsion dispersion | Ex. 26<br>100 | Ex. 27<br>100 | Ex. 26<br>70 | *7 |
| SBR latex<br>Rodex K (solid) | 0 | 0 | 30 | |
| Result of evaluation | | | | |
| Strength ($N/mm^2$)<br>Temperature (°C) | | | | |
| 5 | 25 | 27 | 18 | 25 |
| 20 | 8 | 8 | 10 | 8 |
| 30 | 5 | 6 | 4 | 2 |
| Elongation (%)<br>Temperature (°C) | | | | |
| 5 | 300 | 300 | 400 | 2 |
| 20 | 500 | 400 | 600 | 30 |
| 30 | 600 | 500 | 800 | 70 |

*7: Blown asphalt (available from Cosmo Oil Co., Ltd.) was used.

It is found that when used as a modifier for waterproofing asphalt, the SBS cationic aqueous emulsion dispersion of the present invention provides a suitable property, i.e., excellent balance in the strength and elongation.

The aqueous emulsion dispersion of the present invention has improved emulsifying property and thus improved storage stability (stability over time) and mechanical stability as compared with the dispersions described in JP-A-2001-59053 and JP-A-2001-98159.

The aqueous emulsion dispersion of the present invention is useful as an asphalt modifier and as an emulsion which can be applied to aqueous pressure-sensitive adhesive or aqueous chipping-resistant coating. The aqueous emulsion dispersion of the present invention is also capable of providing excellent properties when used by mixing into other emulsions used for many utilities.

**Claims**

1. An aqueous emulsion dispersion of thermoplastic elastomer obtained by emulsifying and dispersing a thermoplastic elastomer by using three different kinds of surfactant of a nonionic surfactant, an anionic surfactant and a cationic surfactant.

2. The aqueous emulsion dispersion of Claim 1, wherein said aqueous emulsion dispersion is an anionic aqueous emulsion dispersion obtained by emulsifying and dispersing by using said cationic surfactant in an amount smaller than that of said anionic surfactant.

3. The aqueous emulsion dispersion of Claim 2, wherein said cationic surfactant is added in an amount of 0.1 to 50.0 parts by weight based on 100 parts by weight of said anionic surfactant.

4. The aqueous emulsion dispersion of Claim 1, wherein said aqueous emulsion dispersion is a cationic aqueous emulsion dispersion obtained by emulsifying and dispersing by using said anionic surfactant in an amount smaller than that of said cationic surfactant.

5. The aqueous emulsion dispersion of Claim 4, wherein said anionic surfactant is added in an amount of 0.1 to 50.0 parts by weight based on 100 parts by weight of said cationic surfactant.

6. The aqueous emulsion dispersion of Claim 1, wherein said nonionic surfactant is styrenated phenol polyalkylene oxide adduct.

7. The aqueous emulsion dispersion of Claim 6, wherein monostyrenated phenol polyalkylene oxide adduct, distyrenated phenol polyalkylene oxide adduct, and tri or more styrenated phenol polyalkylene oxide adduct are contained in a weight ratio of 10 to 20 : 40 to 55 : 30 to 45, as said styrenated phenol polyalkylene oxide adduct, the total amounting to 100.

8. The aqueous emulsion dispersion of Claim 1, wherein said nonionic surfactant is benzylated phenol polyalkylene oxide adduct.

9. The aqueous emulsion dispersion of Claim 8, wherein monobenzylated phenol polyalkylene oxide adduct, dibenzylated phenol polyalkylene oxide adduct, and tri or more benzylated phenol polyalkylene oxide adduct are contained in a weight ratio of 10 to 20 : 40 to 55 : 30 to 45, as said benzylated phenol polyalkylene oxide adduct, the total amounting to 100.

10. The aqueous emulsion dispersion of Claim 2, further comprising a cellulose derivative as a thickener.

11. The aqueous emulsion dispersion of Claim 4, further comprising a nonionic cellulose derivative and/or a cationic polymer as a thickener.

12. A process for producing an aqueous emulsion dispersion which comprises:

    dissolving a nonionic surfactant, an anionic surfactant and a cationic surfactant into a solution comprising a thermoplastic elastomer and an organic solvent, thereby preparing a solution,
    mixing said solution with water to emulsify, and
    removing said organic solvent.

**13.** The process of Claim 12, wherein said cationic surfactant is used in an amount smaller than that of said anionic surfactant.

**14.** The process of Claim 12, wherein said anionic surfactant is used in an amount smaller than that of said cationic surfactant.

**15.** The process of Claim 12, further comprising, after removing said organic solvent, adding and dissolving a thickener.

European Patent Office

# EUROPEAN SEARCH REPORT

Application Number
EP 03 00 4402

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.7) |
|---|---|---|---|
| X<br><br>Y | US 4 162 143 A (YOUNT JOSEPH B)<br>24 July 1979 (1979-07-24)<br>* column 2, line 4 - column 4, line 25 *<br>* column 8, line 13 - column 11, line 10; examples 1,2 *<br>--- | 1-5, 10-15<br><br>1-15 | C08J3/00<br>C08J3/02<br>C08J3/03<br>C08J3/05<br>C08J3/07<br>C08L95/00 |
| X | US 4 401 788 A (HIYOSHI KAZUHIKO ET AL)<br>30 August 1983 (1983-08-30)<br>* column 1, line 10 - line 38 *<br>* column 2, line 57 - column 3, line 60; claims 1-8 *<br>--- | 1-5, 10-15 | |
| Y | EP 1 114 844 A (DAI ICHI KOGYO SEIYAKU CO LTD ;JSR CORP (JP))<br>11 July 2001 (2001-07-11)<br>* the whole document *<br>----- | 1-15 | |

TECHNICAL FIELDS SEARCHED (Int.Cl.7)

C08J
C08L

The present search report has been drawn up for all claims

| Place of search | Date of completion of the search | Examiner |
|---|---|---|
| MUNICH | 28 May 2003 | Kiebooms, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 00 4402

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2003

| Patent document cited in search report | Publication date | Patent family member(s) | Publication date |
|---|---|---|---|
| US 4162143 A | 24-07-1979 | AU 519833 B2 | 24-12-1981 |
| | | AU 4499979 A | 20-09-1979 |
| | | CA 1122096 A1 | 20-04-1982 |
| | | DE 2963556 D1 | 14-10-1982 |
| | | EP 0004195 A2 | 19-09-1979 |
| | | JP 1052027 C | 30-06-1981 |
| | | JP 54125206 A | 28-09-1979 |
| | | JP 55042853 B | 01-11-1980 |
| US 4401788 A | 30-08-1983 | JP 1425817 C | 25-02-1988 |
| | | JP 57139136 A | 27-08-1982 |
| | | JP 60054984 B | 03-12-1985 |
| EP 1114844 A | 11-07-2001 | JP 2001098158 A | 10-04-2001 |
| | | JP 2001098159 A | 10-04-2001 |
| | | JP 2001049124 A | 20-02-2001 |
| | | JP 2001059053 A | 06-03-2001 |
| | | JP 2001294766 A | 23-10-2001 |
| | | EP 1114844 A1 | 11-07-2001 |
| | | US 6518354 B1 | 11-02-2003 |
| | | WO 0073382 A1 | 07-12-2000 |

EPO FORM P0459

For more details about this annex : see Official Journal of the European Patent Office, No. 12/82